# EUROPÄISCHE PATENTANMELDUNG

(11) **EP 4 190 499 A1**
(43) Veröffentlichungstag der Anmeldung: **07.06.2023**
(21) Anmeldenummer: 21211566.1
(22) Anmeldetag: 01.12.2021
(51) Int. Cl.: B25F 1/00, B25F 5/00

(54) **SYSTEM, SCHNITTSTELLE, WERKZEUGMASCHINE UND ENERGIEVERSORGUNGSVORRICHTUNG**

(71) Anmelder: Hilti Aktiengesellschaft, 9494 Schaan (LI)
(72) Erfinder: Hartmann, Markus, 87665 Mauerstetten (DE); Liebert, Bernhard, 85235 Pfaffenhofen A.D. Glonn (DE); Schmid, Stefan, 86929 Untermühlhausen (DE); Holubarsch, Markus, 86899 Landsberg am Lech (DE); Stanger, Robert, 87600 Kaufbeuren (DE)
(74) Vertreter: Hilti Aktiengesellschaft Corporate Intellectual Property

(57) **Zusammenfassung**

Die vorliegende Erfindung betrifft ein System, das eine Werkzeugmaschine und eine Energieversorgungsvorrichtung umfasst, wobei die Werkzeugmaschine über eine Schnittstelle lösbar mit der Energieversorgungsvorrichtung verbunden werden kann. Die Schnittstelle weist ein Grundmaterial mit einer ersten Dichte auf und ist derart ausgebildet, dass die Schnittstelle eine Relativbewegung der Werkzeugmaschine und der Energieversorgungsvorrichtung in einer Einschubrichtung zulässt und eine Relativbewegung zwischen der Werkzeugmaschine und der Energieversorgungsvorrichtung in den anderen Raumrichtungen verhindert. Die Energieversorgungsvorrichtung weist einen ersten Kontaktbereich mit einem ersten Kontaktmaterial auf und die Werkzeugmaschine weist einen zweiten Kontaktbereich mit einem zweiten Kontaktmaterial auf, wobei das erste Kontaktmaterial und/oder das zweite Kontaktmaterial eine zweite Dichte aufweisen, wobei die zweite Dichte größer ist als die erste Dichte des Grundmaterials der Schnittstelle. In weiteren Aspekten betrifft die Erfindung eine Werkzeugmaschine, eine Energieversorgungsvorrichtung und eine entsprechende Schnittstelle.

## Beschreibung

Die vorliegende Erfindung betrifft ein System, das eine Werkzeugmaschine und eine Energieversorgungsvorrichtung umfasst, wobei die Werkzeugmaschine über eine Schnittstelle lösbar mit der Energieversorgungsvorrichtung verbunden werden kann. Die Schnittstelle weist ein Grundmaterial mit einer ersten Dichte auf und ist derart ausgebildet, dass die Schnittstelle eine Relativbewegung der Werkzeugmaschine und der Energieversorgungsvorrichtung in einer Einschubrichtung zulässt und eine Relativbewegung zwischen der Werkzeugmaschine und der Energieversorgungsvorrichtung in den anderen Raumrichtungen verhindert. Die Energieversorgungsvorrichtung weist einen ersten Kontaktbereich mit einem ersten Kontaktmaterial auf und die Werkzeugmaschine weist einen zweiten Kontaktbereich mit einem zweiten Kontaktmaterial auf, wobei das erste Kontaktmaterial und/oder das zweite Kontaktmaterial eine zweite Dichte aufweisen, wobei die zweite Dichte größer ist als die erste Dichte des Grundmaterials der Schnittstelle. In weiteren Aspekten betrifft die Erfindung eine Werkzeugmaschine, eine Energieversorgungsvorrichtung und eine entsprechende Schnittstelle.

### Hintergrund der Erfindung:

Die Erfindung ist auf dem Gebiet der Schnittstellen für wiederaufladbaren Energieversorgungsvorrichtungen angesiedelt. Insbesondere Energieversorgungsvorrichtungen für Werkzeugmaschinen sind in der Regel so gestaltet, dass die Energieversorgungsvorrichtungen zum Aufladen in einer Ladestation gelagert werden kann. Während des Aufladens der Energieversorgungsvorrichtung kann der Nutzer mit einer weiteren Energieversorgungsvorrichtung die Werkzeugmaschine weiter betreiben und so einen Arbeitsfortschritt erzielen.

Die Energieversorgungsvorrichtung kann über eine Schnittstelle mit der Werkzeugmaschine verbunden vorliegen, wenn die Energieversorgungsvorrichtung die Werkzeugmaschine während ihres Betriebs mit elektrischer Energie versorgen soll. In diesem Arbeitsmodus soll die Energieversorgungsvorrichtung sicher und stabil in der Werkzeugmaschine gehalten und befestigt werden, wobei es wünschenswert wäre, dass die Befestigung auch Erschütterungen und Vibrationen, wie sie auf Baustellen auftreten können, aushält.

Eine besondere Rolle spielt dabei die Schnittstelle, mit der die Energieversorgungsvorrichtung an der Werkzeugmaschine verbunden wird. Diese Schnittstelle soll auf der einen Seite besonders robust ausgebildet sein und eine hohe Verschleißfestigkeit aufweisen. Auf der anderen Seite soll sie auch ein geringes Gewicht aufweisen und kostengünstig im Massenverfahren herstellbar sein.

Die Aufgabe, die der vorliegenden Erfindung zugrunde liegt, besteht darin, die Mängel und Nachteile des Standes der Technik zu überwinden und eine Schnittstelle zur Verbindung einer Energieversorgungsvorrichtung mit einer Werkzeugmaschine bereitzustellen, die besonders robust gegenüber Verschleiß ist und langlebig ist. Weitere Anliegen der Erfindung bestehen darin, eine Werkzeugmaschine, eine Energieversorgungsvorrichtung und ein System aus Werkzeugmaschine und Energieversorgungsvorrichtung anzugeben, mit denen eine robuste und langlebige Verbindung zwischen Energieversorgungsvorrichtung und Werkzeugmaschine ermöglicht werden kann und die auch eine hohe Anzahl von Einschubvorgängen, sowie den anspruchsvollen Betrieb des Systems aushält.

Die Aufgabe wird gelöst durch den Gegenstand der unabhängigen Ansprüche. Vorteilhafte Ausführungsformen zu dem Gegenstand der unabhängigen Ansprüche finden sich in den abhängigen Ansprüchen.

### Beschreibung der Erfindung:

Erfindungsgemäß ist ein System vorgesehen, dass eine Werkzeugmaschine und eine Energieversorgungsvorrichtung umfasst, wobei die Werkzeugmaschine über eine Schnittstelle lösbar mit der Energieversorgungsvorrichtung verbunden werden kann. Das System ist dadurch gekennzeichnet, dass die Schnittstelle ein Grundmaterial mit einer ersten Dichte umfasst und derart ausgebildet ist, dass die Schnittstelle eine Relativbewegung der Werkzeugmaschine und der Energieversorgungsvorrichtung in einer Einschubrichtung zulässt. Die Energieversorgungsvorrichtung weist einen ersten Kontaktbereich mit einem ersten Kontaktmaterial auf und die Werkzeugmaschine weist einen zweiten Kontaktbereich mit einem zweiten Kontaktmaterial auf, wobei der erste Kontaktbereich mit dem zweiten Kontaktbereich in einem eingeschobenen Zustand so in Kontakt steht, dass eine Relativbewegung zwischen der Werkzeugmaschine und der Energieversorgungsvorrichtung in den anderen Raumrichtungen verhindert wird. Das erste Kontaktmaterial und/oder das zweite Kontaktmaterial weisen eine zweite Dichte auf, wobei die zweite Dichte größer ist als die erste Dichte des Grundmaterials der Schnittstelle. Es hat sich gezeigt, dass mit der Erfindung eine besonders robuste Schnittstelle zur Verbindung einer Energieversorgungsvorrichtung mit einer Werkzeugmaschine bereitgestellt werden kann, die vorteilhafterweise den hohen mechanischen und elektrischen Belastungen, die bei Betrieb einer leistungsstarken Werkzeugmaschinen und/oder einer leistungsstarken Energieversorgungsvorrichtung auftreten können, gerecht wird.

Es ist im Sinne der Erfindung bevorzugt, dass die Schnittstelle von den Kontaktbereichen der Systembestandteile «Werkzeugmaschine» und «Energieversorgungsvorrichtung» gebildet wird. Die Schnittstelle ermöglicht vorzugsweise eine Linearführung der Energieversorgungsvorrichtung in einem Hohlraum der Werkzeugmaschine oder an einem Außenbereich der Werkzeugmaschine. Beispielsweise kann die Energieversorgungsvorrichtung an einer Unterseite der Werkzeugmaschine befestigt werden, wenn die Werkzeugmaschine von der Energieversorgungsvorrichtung mit elektrischer Energie versorgt werden soll. Die Systembestandteile «Werkzeugmaschine» und «Energieversorgungsvorrichtung» werden im Sinne der Erfindung bevorzugt auch als «Verbindungspartner der Schnittstelle» bezeichnet. Wenn sich das Grundmaterial und das Kontaktmaterial des Kontaktbereichs der Werkzeugmaschine und/oder der Energieversorgungsvorrichtung in ihrer Dichte unterscheiden, liegen vorzugsweise zwei verschiedene Materialien im Bereich der Schnittstelle vor. Die Schnittstelle stellt dann vorzugsweise eine «Hybrid-Linearführung» dar. Aufgrund des Aufbaus aus den mindestens zwei genannten Materialien können die Kontaktbereiche der Schnittstelle an der Werkzeugmaschine und/oder an der Energieversorgungsvorrichtung vorzugsweise auch als «Hybrid-Linearführung» oder als «Linearführung in Hybridbauweise» bezeichnet werden.

Es hat sich gezeigt, dass durch die Verwendung der zwei Materialien mit unterschiedlichen Dichten eine besonders robuste, verschleißfeste und langlebige Schnittstelle zur Verbindung einer Energieversorgungsvorrichtung mit einer Werkzeugmaschine bereitgestellt werden kann. Die Schnittstelle erfüllt dadurch erhöhte Verschleißanforderungen, die zukünftig - beispielsweise bedingt durch neue Batterietechnologien - an die Verbindung von Energieversorgungsvorrichtung und Werkzeugmaschine gestellt werden könnten. Denn es ist zu erwarten, dass neue Batterietechnologien Energieversorgungsvorrichtung mit längeren Lebenszeiten hervorbringen werden. Für diesen Fall ist es vorteilhaft, wenn auch die Schnittstellen zur Verbindung einer Energieversorgungsvorrichtung mit einer Werkzeugmaschine mit diesen längeren Lebenszeiten mithalten können, ohne vor Ablauf der Lebenszeit der Energieversorgungsvorrichtung ausgetauscht werden zu müssen. Vorteilhafterweise kann mit der Erfindung eine technische Lösung zur Verbindung einer Energieversorgungsvorrichtung mit einer Werkzeugmaschine bereitgestellt werden, die sowohl eine hohe Verschleißfestigkeit aufweist, als auch in der Lage ist, eine hohe Sicherheit gegenüber einem unerwünschten Lösen der Schnittstelle zu gewährleisten. Tests haben gezeigt, dass das vorgeschlagene System, bei dem mindestens ein Kontaktbereich ein Kontaktmaterial mit einer vom Grundmaterial abweichenden, bevorzugt höheren Dichte aufweist, diese Ziele vorteilhafterweise erfüllt.

Es ist im Sinne der Erfindung bevorzugt, dass die Werkzeugmaschine und die Energieversorgungsvorrichtung im Bereich der Schnittstelle ein Grundmaterial aufweisen, das vorzugsweise eine erste Dichte aufweist. Das Grundmaterial kann beispielsweise ein Kunststoff sein. Die Formulierung, wonach «die Schnittstelle ein Grundmaterial mit einer ersten Dichte umfasst» ist im Sinne der Erfindung bevorzugt so zu verstehen, dass sowohl die Werkzeugmaschine, als auch die Energieversorgungsvorrichtung im Bereich der Schnittstelle ein Grundmaterial mit einer ersten Dichte umfassen können. Die Energieversorgungsvorrichtung weist im Bereich der Schnittstelle einen ersten Kontaktbereich auf, der ein erstes Kontaktmaterial umfasst. Diese erste Kontaktmaterial kann in einem ersten Ausführungsbeispiel der Erfindung dem Grundmaterial entsprechen und eine im Wesentlichen gleiche oder ähnliche Dichte aufweisen wie das Grundmaterial. In einem zweiten Ausführungsbeispiel der Erfindung kann das erste Kontaktmaterial ein anderes, von dem Grundmaterial abweichendes Material mit einer zweiten Dichte sein. Es ist im Sinne der Erfindung ganz besonders bevorzugt, dass das Kontaktmaterial, das eine zweite Dichte aufweist, ein Metall, eine Metalllegierung und/oder eine Metallbeschichtung als Kontaktmaterial umfasst oder aus einem solchen gebildet wird. In diesem Fall kann das Grundmaterial der Energieversorgungsvorrichtung im Bereich der Schnittstelle Vertiefungen und/oder Ausbuchtungen aufweisen, wobei die Vertiefungen und/oder Ausbuchtungen dazu eingerichtet sind, Einleger und/oder Einlegteile aus einem Kontaktmaterial mit einer zweiten Dichte aufzunehmen. Es ist im Sinne der Erfindung ganz besonders bevorzugt, dass die Einleger und/oder Einlegteile ein Metall, eine Metalllegierung und/oder eine Metallbeschichtung umfassen. Es ist im Sinne der Erfindung bevorzugt, dass die Einleger und/oder Einlegteile aus Metall in diesem zweiten Ausführungsbeispiel der Erfindung den ersten Kontaktbereich der Energieversorgungsvorrichtung bilden.

Es kann im Sinne der Erfindung bevorzugt sein, dass zur Herstellung der Einleger oder der Einlege-Teile Blechteile in ein Spritzgusswerkzeug eingelegt und von einem Material geringerer Dichte umspritzt werden. Bei dem Material der geringeren Dichte kann es sich vorzugsweise um das Grundmaterial der Schnittstelle handeln, d.h. vorzugsweise einen Kunststoff. Es kann im Sinne der Erfindung auch bevorzugt sein, dass sowohl die Werkzeugmaschine, als auch die Energieversorgungsvorrichtung ein Grundmaterial umfassen, wobei die Grundmaterialien der Werkzeugmaschine und/oder der Energieversorgungsvorrichtung leicht voneinander abweichen können. Es ist im Sinne der Erfindung bevorzugt, dass kleinere Abweichungen bei den Grundmaterialien der Verbindungspartner der Schnittstelle nicht als Materialien mit unterschiedlicher Dichte bewertet werden. Auch kleinere Abweichungen, beispielsweise bei der Zusammensetzung des Grundmaterials, wenn es sich zum Beispiel um einen Kunststoff handelt, werden im Sinne der Erfindung als Grundmaterialien mit einer ersten Dichte betrachtet, wobei die erste Dichte vorzugsweise kleiner ist als eine zweite Dichte des ersten oder des zweiten Kontaktmaterials. Vorzugsweise kann die erste Dichte, d.h. die Dichte des Grundmaterials, in einem Bereich von kleiner als 3,0 g/cm³, bevorzugt kleiner als 2 g/cm³ liegen, während die zweite Dichte in einem Bereich von größer als 3,0 g/cm³, bevorzugt größer als 4 g/cm³ liegt.

Die Werkzeugmaschine weist im Bereich der Schnittstelle einen zweiten Kontaktbereich auf, der ein zweites Kontaktmaterial umfasst. Diese zweite Kontaktmaterial kann in einem weiteren Ausführungsbeispiel der Erfindung dem Grundmaterial entsprechen und eine im Wesentlichen gleiche oder ähnliche Dichte aufweisen wie das Grundmaterial. In einem noch weiteren Ausführungsbeispiel der Erfindung kann das zweite Kontaktmaterial ein anderes, von dem Grundmaterial abweichendes Material mit einer zweiten Dichte sein. Es ist im Sinne der Erfindung ganz besonders bevorzugt, dass das Kontaktmaterial, das eine zweite Dichte aufweist, ein Metall, eine Metalllegierung und/oder eine Metallbeschichtung als Kontaktmaterial umfasst oder aus einem solchen gebildet wird. In diesem Fall kann das Grundmaterial der Werkzeugmaschine im Bereich der Schnittstelle Vertiefungen und/oder Ausbuchtungen aufweisen, wobei die Vertiefungen und/oder Ausbuchtungen dazu eingerichtet sind, Einleger und/oder Einlegteile aus einem Kontaktmaterial mit einer zweiten Dichte aufzunehmen. Es ist im Sinne der Erfindung ganz besonders bevorzugt, dass die Einleger und/oder Einlegteile ein Metall, eine Metalllegierung und/oder eine Metallbeschichtung umfassen. Es ist im Sinne der Erfindung bevorzugt, dass die Einleger und/oder Einlegteile aus Metall in diesem weiteren Ausführungsbeispiel der Erfindung den zweiten Kontaktbereich der Werkzeugmaschine bilden.

Im Bereich der Schnittstelle trifft im Verbindungsfall somit ein erstes Kontaktmaterial der Energieversorgungsvorrichtung auf ein zweites Kontaktmaterial der Werkzeugmaschine, wobei mindestens eines der Kontaktmaterialien eine zweite Dichte aufweist, d.h. beispielsweise von Einleger und/oder Einlegteile aus Metall gebildet wird. Dadurch kann die Verschleißfestigkeit und Robustheit der gesamten Schnittstelle wesentlich erhöht werden, da insbesondere an den mechanisch besonders belasteten Kontaktbereichen ein verschleißfestes Material zum Einsatz kommt. Vorteilhafterweise kann dadurch eine besonders robuste, langlebige und verschleißarme Schnittstelle zur Verbindung der Energieversorgungsvorrichtung mit der Werkzeugmaschine bereitgestellt werden.

Beispielsweise können Einleger oder Einlegeteile aus Metall oder einer Metall-Legierung als Kontaktmaterial mit einer zweiten Dichte verwendet und in Vertiefungen innerhalb des Grundmaterials eines der Verbindungspartner der Schnittstelle eingesetzt werden. Die Einleger oder Einlegeteile aus Metall oder eine Metall-Legierung können beispielsweise aus einem Blech gefertigt werden oder Blech umfassen, wobei der Begriff «Blech» im Sinne der Erfindung bevorzugt als «Walzwerkerzeugnis umfassend Metall oder eine Metall-Legierung» verstanden wird. Die hohe Dichte des Kontaktmaterials führt vorzugsweise zu der hohen Verschleißfestigkeit im Kontaktbereich des Verriegelungselements und damit vorteilhafterweise zu einer längeren Lebensdauer der Schnittstelle, die ein solches Verriegelungselement umfasst. Als Metalle kann beispielsweise Nickel (Ni) verwendet werden. Es ist im Sinne der Erfindung bevorzugt, dass die Kontaktmaterialien mit einer zweiten Dichte einen PREN-Wert von größer als 10 aufweisen, wobei der PREN-Wert bevorzugt in einem Bereich von 13 oder von größer als 15 liegt. Die Abkürzung PREN steht vorzugsweise für die Pitting Resistance Equivalent Number ist stellt ein Maß für Korrosionsfestigkeit eines Materials dar.

Wenn die Energieversorgungsvorrichtung mit der Werkzeugmaschine verbunden werden soll, um die Werkzeugmaschine mit elektrischer Energie zu versorgen, kann die Energieversorgungsvorrichtung beispielsweise in einen Hohlraum der Werkzeugmaschine eingeführt werden. Es kann im Sinne der Erfindung auch bevorzugt sein, dass die Energieversorgungsvorrichtung in eine Aufnahmevorrichtung der Werkzeugmaschine eingeführt werden kann, wobei die Aufnahmevorrichtung beispielsweise an einer Unterseite der Werkzeugmaschine angeordnet vorliegt. Insbesondere kann es im Sinne der Erfindung bevorzugt sein, dass die Energieversorgungsvorrichtung an einer Unterseite oder einer Seitenwand der Werkzeugmaschine befestigt wird. Wenn die Werkzeugmaschine einen Hohlraum zur Aufnahme der Energieversorgungsvorrichtung aufweist, ist dieser Hohlraum vorzugsweise im Wesentlichen quaderförmig ausgebildet, wobei eine Seite des Hohlraums in der Regel offen ist. Diese offene Seite des Hohlraums kann vorzugsweise als «Rückseite des Hohlraums» bezeichnet werden. Neben der offenen Seite kann der bevorzugt schachtartige Hohlraum eine Oberseite, eine Unterseite, eine Vorderseite und zwei Seitenwände aufweisen. Dabei liegen vorzugsweise die Ober- und die Unterseite, die zwei Seitenwände und die Vorderseite und die offene Seite des Hohlraums auf gegenüberliegenden Seiten des Hohlraums vor, d.h. die genannten Seiten liegen sich jeweils gegenüber. Die offene Seite des Hohlraums stellt vorzugsweise die Einschuböffnung für die Energieversorgungsvorrichtung dar. Das bedeutet, dass die Energieversorgungsvorrichtung durch diese Einschuböffnung in die Werkzeugmaschine bzw. den dafür vorgesehen Hohlraum eingeführt werden kann.

Neben den vorteilhaften Materialeigenschaften weist das vorgeschlagene System bzw. die vorgeschlagene Schnittstelle auch vorteilhafter mechanische Eigenschaften auf. Vorteilhafterweise ist die Schnittstelle so ausgebildet, dass sie eine Relativbewegung der Werkzeugmaschine und der Energieversorgungsvorrichtung in einer Einschubrichtung zulässt und eine Relativbewegung zwischen der Werkzeugmaschine und der Energieversorgungsvorrichtung in den anderen Raumrichtungen verhindert. Zur Beschreibung der vorliegenden Erfindung kann ein virtuelles Koordinatensystem verwendet werden, bei dem eine Einschubrichtung der Schnittstelle vorzugsweise mit der ersten Raumachse des virtuellen Koordinatensystems zusammenfällt. Es ist im Sinne der Erfindung bevorzugt, dass sich eine zweite Achse des virtuellen Koordinatensystems zwischen einer Unterseite und einer Oberseite des Hohlraums der Werkzeugmaschine zur Aufnahme der Energieversorgungsvorrichtung erstreckt, während sich eine dritte Achse des virtuellen Koordinatensystems zwischen den Seitenflächen des Aufnahmeschachts für die Energieversorgungsvorrichtung erstreckt. In Bezug auf die Energieversorgungsvorrichtung betrachtet, erstreckt sich die erste Raumachse vorzugsweise zwischen der Vorderseite der Energieversorgungsvorrichtung und der Rückseite der Energieversorgungsvorrichtung, wobei die Energieversorgungsvorrichtung mit ihrer Vorderseite voran in einen Hohlraum der Werkzeugmaschine eingeführt werden kann. Die zweite Raumachse des virtuellen Koordinatensystems erstreckt in Bezug auf die Energieversorgungsvorrichtung zwischen eine Oberseite und einer Unterseite der Energieversorgungsvorrichtung, während sich die dritte Raumachse des virtuellen Koordinatensystems zwischen den Seitenflächen der Energieversorgungsvorrichtung erstreckt. Die Achsen des virtuellen Koordinatensystems stehen vorzugsweise senkrecht aufeinander, wobei die erste Achse der x-Achse eines bekannten Koordinatensystems entspricht (vor und zurück), die zweite Achse der y-Achse (hoch und runter) und die dritte Achse der z-Achse (aus der Bildebene heraus und wieder hinein). In der Denkweise des virtuellen Koordinatensystems fällt eine Vorderseite des Hohlraums der Werkzeugmaschine in Einschubrichtung mit einem vorderen Bereich der Energieversorgungsvorrichtung zusammen, weil die Vorderseite des Hohlraums quasi das Ziel der Einschubbewegung ist. Die offene Seite des Hohlraums fällt dahingegen vorzugsweise mit der Rückseite des Hohlraums zusammen. Insbesondere kann im Kontext der vorliegenden Erfindung eine Einschubrichtung definiert werden, die derjenigen Richtung entspricht, in der die Energieversorgungsvorrichtung in die Werkzeugmaschine eingeführt wird. Das bedeutet, dass sich die Einschubrichtung ausgehend von der Einschuböffnung in Richtung der Vorderseite des bevorzugt schachtartigen Hohlraums der Werkzeugmaschine erstreckt. Diese Einschubrichtung fällt vorzugsweise zusammen mit einer ersten Achse eines virtuellen Koordinatensystems, das zur Beschreibung der Erfindung verwendet wird (vgl. Figuren).

Es ist im Sinne der Erfindung bevorzugt, dass die Seitenwände und Seitenflächen der Energieversorgungsvorrichtung korrespondierend zu den Wänden des Hohlraums der Werkzeugmaschine ausgebildet sind. Die korrespondieren Ausbildung der Seitenwände und Seitenflächen der Energieversorgungsvorrichtung auf der einen Seite und der Wände des Hohlraums der Werkzeugmaschine auf der anderen Seite bedeutet im Sinne der Erfindung bevorzugt, dass die Wänden jeweils im Wesentlich plane Oberflächen aufweisen, so dass die Energieversorgungsvorrichtung besonders einfach und sicher in den Hohlraum der Werkzeugmaschine eingeführt werden kann. Insbesondere weisen die Seitenwände und Seitenflächen der Energieversorgungsvorrichtung und die Wände des Hohlraums der Werkzeugmaschine keine vorstehenden Bereiche oder Elemente auf, die beim Einschieben der Energieversorgungsvorrichtung in die Werkzeugmaschine eine Behinderung darstellen könnten.

Vorzugsweise weist die Energieversorgungsvorrichtung eine quaderförmige Grundform auf, wobei die Energieversorgungsvorrichtung insbesondere eine Oberseite und eine Unterseite, ein Vorder- und eine Rückseite, sowie zwei Seitenflächen aufweist. Es ist im Sinne der Erfindung bevorzugt, den Zustand, in dem die Energieversorgungsvorrichtung in dem Hohlraum oder an der Aufnahmevorrichtung der Werkzeugmaschine eingeführt vorliegt, als «eingeführten» oder «eingeschobenen» Zustand zu bezeichnen. In diesem Zustand ist es vorzugsweise nicht erforderlich, dass die Energieversorgungsvorrichtung bereits verriegelt ist. Es ist im Sinne der Erfindung vielmehr bevorzugt, dass sich die Energieversorgungsvorrichtung im eingeführten Zustand noch in oder an der Werkzeugmaschine bewegen kann, zumindest in Einschubrichtung. Diese Bewegungsfähigkeit der Energieversorgungsvorrichtung in Bezug auf die Werkzeugmaschine in Einschubrichtung wird im Sinne der Erfindung dadurch ermöglicht, dass die Schnittstelle zwischen Werkzeugmaschine und Energieversorgungsvorrichtung derart ausgebildet, dass sie eine Relativbewegung der Werkzeugmaschine und der Energieversorgungsvorrichtung in einer Einschubrichtung zulässt. In der Sprache des virtuellen Koordinatensystems kann die Energieversorgungsvorrichtung somit vorzugsweise in der ersten Raumrichtung hin- und herbewegt bzw. vor und zurück bewegt werden.

Darüber hinaus ist die Schnittstelle dazu eingerichtet, eine Relativbewegung zwischen der Werkzeugmaschine und der Energieversorgungsvorrichtung in den anderen Raumrichtungen zu verhindern. Die «anderen Raumrichtungen» werden im Sinne der Erfindung bevorzugt durch die zweite Raumachse und die dritte Raumachse festgelegt. Vorteilhafterweise lässt die Schnittstelle eine Bewegung der Energieversorgungsvorrichtung in Relation zu der Werkzeugmaschine nicht zu bzw. verhindert diese. Dadurch kann die Energieversorgungsvorrichtung besonders sicher, stabil und beschädigungsfrei in die Werkzeugmaschine eingeführt bzw. an dieser befestigt werden, ohne dass es zu unerwünschten Relativbewegungen in den anderen Raumrichtungen kommt, d.h. zu Relativbewegungen in Raumrichtungen, die vorzugsweise mit der zweiten und dritten Raumachse des virtuellen Koordinatensystems zusammenfallen. Durch die Kombination der vorteilhaften Materialeigenschaften mit den vorteilhaften, zuletzt beschriebenen mechanischen Eigenschaften kann mit der Erfindung eine besonders robuste, langlebige und verschleißarme Schnittstelle zur Verbindung der Energieversorgungsvorrichtung mit der Werkzeugmaschine bereitgestellt werden, wobei die mindestens einer der mechanisch besonders belasteten Kontaktbereiche ein besonders verschleißfestes Material aufweist und die Schnittstelle eine Relativbewegung zwischen der Werkzeugmaschine und der Energieversorgungsvorrichtung in einer Einschubrichtung zulässt und in anderen Raumrichtungen sperrt.

Der Zustand, in dem die Energieversorgungsvorrichtung und die Werkzeugmaschine getrennt voneinander vorliegen, wird im Sinne der Erfindung als «getrennter» oder «separater» Zustand bezeichnet. In diesem getrennten oder separaten Zustand kann die Energieversorgungsvorrichtung beispielsweise mit einem Ladegerät verbunden werden, um aufgeladen zu werden.

Die Energieversorgungsvorrichtung kann auf ihrer Oberseite im vorderen Bereich diejenigen Elemente und Komponenten aufweisen, die eine Übertragung von elektrischer Energie von der Energieversorgungsvorrichtung an die Werkzeugmaschine ermöglichen. Darüber hinaus können Mittel zum Datenaustausch zwischen der Energieversorgungsvorrichtung und der Werkzeugmaschine vorgesehen sein. Dabei kann es sich vorzugsweise um Leistungs- und/oder Datenkontakte handeln, die beispielsweise angefedert ausgebildet sein können. Dabei kann die Anfederung beispielsweise im Bereich der Energieversorgungsvorrichtung und/oder im Bereich der Werkzeugmaschine erfolgen. Die Leistungs- und/oder Datenkontakte gelangen nach abgeschlossenem Einschieben der Energieversorgungsvorrichtung in Wirkverbindung mit entsprechenden Kontakten der Werkzeugmaschine, so dass ein Stromfluss und/oder ein Datenaustausch gewährleistet werden kann.

Es ist im Sinne der Erfindung bevorzugt, dass die zweite Dichte in einem Bereich von größer als 3,0 g/cm³, bevorzugt größer als 4 g/cm³ liegt. Bei den Materialien, die für die Ausgestaltung des Kontaktbereichs in Frage kommen, kann es sich beispielsweise um Metalle oder Metall-Legierungen handeln. Mit anderen Worten kann das Kontaktmaterial, das eine zweite Dichte aufweist, ein Metall, eine Metalllegierung und/oder eine Metallbeschichtung sein. Vorteilhafterweise weisen die zum Einsatz kommenden Metalle oder Metall-Legierungen eine besonders gute Verschleißfestigkeit aufweist, so dass eine robuste und langlebige Schnittstelle bereitgestellt werden kann, die viele Einschubvorgänge der Energieversorgungsvorrichtung in die Werkzeugmaschine aushält. Tests haben gezeigt, dass die Schnittstelle insbesondere auch die hohen mechanischen und elektrischen Anforderungen bei Betrieb der Werkzeugmaschine standhält. Mithin gewährleistet die Erfindung eine eine hohe Laufzeit in der Werkzeugmaschine unter Vibrationsbelastung.

Es ist im Sinne der Erfindung bevorzugt, dass eine Oberflächenhärte des Kontaktmaterials, das eine zweite Dichte aufweist, in einem Bereich von größer als 90 HV liegt, bevorzugt in einem Bereich größer als 100 HV, wobei die Einheit «HV» vorzugsweise für eine Härteprüfung des Kontaktmaterials nach Vickers steht. Tests haben gezeigt, dass vor allem Kontaktmaterialien mit einer Vickers-Härte von größer als 100 HV zu besonders verschleißfesten und robusten Schnittstellen und Verriegelungselementen führen können.

Es ist im Sinne der Erfindung bevorzugt, dass die erste Dichte, d.h. die Dichte des Grundmaterials, in einem Bereich von kleiner als 3,0 g/cm³, bevorzugt kleiner als 2 g/cm³ liegt. Bei den Materialien, die für das Grundmaterial in Frage kommen, kann es sich beispielsweise um Kunststoffe handeln. Die geringe Dichte des Grundmaterials führt vorteilhafterweise dazu, dass eine besonders leichte Schnittstelle zur Verbindung der Energieversorgungsvorrichtung mit der Werkzeugmaschine bereitgestellt werden kann. Darüber hinaus stellen Materialien mit einer Dichte von kleiner als 2 g/cm³ besonders kostengünstige Lösungen für die Herstellung der Schnittstelle oder des Verriegelungselements dar.

Es ist im Sinne der Erfindung bevorzugt, dass der Kontaktbereich, der das Kontaktmaterial mit der zweiten Dichte aufweist, einen Anteil von größer als 5 % an einer Führungsfläche zwischen der Werkzeugmaschine und der Energieversorgungsvorrichtung ausmacht. Vorzugsweise kann das besonders verschleißfeste Material, das vorzugsweise dem Kontaktmaterial mit der zweiten Dichte entspricht, einen Anteil von größer als 5 % an einer Gesamtführungsfläche der Schnittstelle aufweisen. Der genannte Anteil des verschleißfesten Materials trägt vorteilhafterweise weiter zur Robustheit und Langlebigkeit der Schnittstelle zwischen der Energieversorgungsvorrichtung und der Werkzeugmaschine bei.

Es ist im Sinne der Erfindung bevorzugt, dass die Energieversorgungsvorrichtung einen ersten Schnittstellen-Körper aufweist und die Werkzeugmaschine einen zweiten Schnittstellen-Körper aufweist, wobei ein Anteil des Kontaktmaterials, das eine zweite Dichte aufweist, an dem ersten Schnittstellen-Körper und/oder an dem zweiten Schnittstellen-Körper kleiner als 10 % ist. Die Schnittstellen-Körper stellen vorzugsweise diejenigen Bereiche und Abschnitte der Energieversorgungsvorrichtung und der Werkzeugmaschine dar, die für die Bildung der Schnittstelle bzw. für die Bildung der Verbindung zwischen den Systembestandteilen relevant bzw. wirksam sind. Mögliche Ausgestaltungen der Schnittstellen-Körper sind in die Figuren dargestellt. Es ist im Sinne der Erfindung bevorzugt, dass das verschleißfeste Material, das vorzugsweise dem Kontaktmaterial mit der zweiten Dichte entspricht, einen Anteil von kleiner als 10 % an dem Schnittstellen-Körper der Energieversorgungsvorrichtung und/oder der Werkzeugmaschine ausmacht. Wenn beispielsweise die Werkzeugmaschine ein Kontaktmaterial mit einer zweiten Dichte aufweist, so liegt vorzugsweise der Anteil dieses Kontaktmaterials mit der zweiten Dichte an dem Schnittstellen-Körper der Werkzeugmaschine bei weniger als 10 %. Wenn dahingegen die Energieversorgungsvorrichtung ein Kontaktmaterial mit einer zweiten Dichte aufweist, so liegt vorzugsweise der Anteil dieses Kontaktmaterials mit der zweiten Dichte an dem Schnittstellen-Körper der Energieversorgungsvorrichtung bei weniger als 10 %. Es kann im Sinne der Erfindung auch bevorzugt sein, dass sowohl die Werkzeugmaschine, als auch die Energieversorgungsvorrichtung ein Kontaktmaterial mit einer zweiten Dichte aufweist. In diesem Fall ist es im Sinne der Erfindung bevorzugt, dass der Anteil dieses besonders verschleißfesten Material an dem jeweiligen Schnittstellen-Körper bei weniger als 10 % liegt. Auf diese Weise kann mit der Erfindung eine besonders leichte Schnittstelle und besonders leichte Werkzeugmaschinen und Energieversorgungsvorrichtungen bereitgestellt werden.

Die Erfindung betrifft auch ein System gemäß der vorliegenden Erfindung, wobei das System eine zweite Energieversorgungsvorrichtung umfasst, wobei die Werkzeugmaschine sowohl mit der ersten Energieversorgungsvorrichtung, als auch mit der zweiten Energieversorgungsvorrichtung lösbar über eine Schnittstelle verbunden werden kann, um elektrische Energie von der jeweiligen, verbundenen Energieversorgungsvorrichtung zu beziehen. Bei dem System mit den zwei Energieversorgungsvorrichtungen umfasst die Schnittstelle ein Grundmaterial mit einer ersten Dichte und sie ist derart ausgebildet, dass die Schnittstelle eine Relativbewegung der Werkzeugmaschine und der Energieversorgungsvorrichtungen in einer Einschubrichtung zulässt, wobei die zweite Energieversorgungsvorrichtung einen dritten Kontaktbereich mit einem dritten Kontaktmaterial aufweist, wobei der dritte Kontaktbereich mit dem zweiten Kontaktbereich in einem eingeschobenen Zustand so in Kontakt steht, dass eine Relativbewegung zwischen der Werkzeugmaschine und der Energieversorgungsvorrichtung in den anderen Raumrichtungen verhindert wird, wobei das dritte Kontaktmaterial die erste Dichte aufweist.

Es ist im Sinne der Erfindung bevorzugt, dass der Kontaktbereich der zweiten Energieversorgungsvorrichtung ein Kontaktmaterial aufweist, das dem Grundmaterial der Schnittstelle entspricht, wobei das Grundmaterial beispielsweise ein Kunststoff sein kann. Die zweite Energieversorgungsvorrichtung weist im Bereich der Schnittstelle einen dritten Kontaktbereich auf, der ein drittes Kontaktmaterial umfasst. Diese erste Kontaktmaterial kann in einem ersten Ausführungsbeispiel der Erfindung dem Grundmaterial entsprechen und eine im Wesentlichen gleiche oder ähnliche Dichte aufweisen wie das Grundmaterial.

Es ist im Sinne der Erfindung die Werkzeugmaschine sowohl von einem ersten Typ Energieversorgungsvorrichtung, als auch von einem zweiten Typ Energieversorgungsvorrichtung mit elektrischer Energie versorgt werden kann, wobei die erste Energieversorgungsvorrichtung vorzugsweise einen Repräsentanten des «ersten Typs Energieversorgungsvorrichtung» darstellt, während die zweite Energieversorgungsvorrichtung vorzugsweise einen Repräsentanten des «zweiten Typs Energieversorgungsvorrichtung» darstellt. Es ist in dieser Ausgestaltung der Erfindung bevorzugt, dass die erste Energieversorgungsvorrichtung einen Kontaktbereich mit einem Kontaktmaterial der zweiten Dichte aufweist, während die zweite Energieversorgungsvorrichtung einen Kontaktbereich mit einem Kontaktmaterial der ersten Dichte aufweist, wobei dieses Kontaktmaterial vorzugsweise dem Grundmaterial der Schnittstelle entspricht. Das bedeutet im Sinne der Erfindung bevorzugt, dass die Werkzeugmaschine sowohl von einer Energieversorgungsvorrichtung mit einem besonders verschleißfesten Schnittstellenbereich mit elektrischer Energie versorgt werden kann (erste Energieversorgungsvorrichtung»), als auch von einer Energieversorgungsvorrichtung mit einer geringeren Dichte, die vorzugsweise der ersten Dichte entspricht («zweite Energieversorgungsvorrichtung»). Es ist im Sinne der Erfindung bevorzugt, dass die Energieversorgungsvorrichtung mit dem Kontaktmaterial der zweiten Dichte, d.h. die erste Energieversorgungsvorrichtung, eine besonders leistungsstarke Energieversorgungsvorrichtung ist, die dazu eingerichtet ist, besonders leistungsstarke Werkzeugmaschinen mit elektrischer Energie zu versorgen. Es kann im Sinne der Erfindung bevorzugt sein, dass die Energieversorgungsvorrichtung mit dem Kontaktmaterial der ersten Dichte, d.h. die zweite Energieversorgungsvorrichtung, eine weniger leistungsstarke Energieversorgungsvorrichtung ist, die dazu eingerichtet ist, kleinere Werkzeugmaschinen mit elektrischer Energie zu versorgen.

Selbstverständlich kann das vorgeschlagene System auch mehr als eine Werkzeugmaschine und mehr als zwei Energieversorgungsvorrichtungen umfassen. Vorzugsweise weist dabei mindestens eine Energieversorgungsvorrichtung des Systems ein Kontaktmaterial mit einer ersten Dichte auf, während mindestens eine andere Energieversorgungsvorrichtung des Systems ein Kontaktmaterial mit einer zweiten Dichte aufweist. Die Werkzeugmaschine kann ein Kontaktmaterial der ersten oder der zweiten Dichte aufweisen. In einem besonders bevorzugten Ausführungsbeispiel der Erfindung kann das System mindestens zwei Werkzeugmaschinen und mindestens zwei Energieversorgungsvorrichtungen umfassen. Bei den Werkzeugmaschinen kann es sich beispielsweise um einen Akku-Schrauber handeln, der aufgrund der typischerweise mit einem Akku-Schrauber durchgeführten Anwendungen eine geringere Lebensdaueranforderung als beispielsweise ein Schlagbohrhammer hat. Der Schlagbohrhammer kann beispielsweise die zweite Werkzeugmaschine in dem Ausführungsbeispiel des Systems darstellen, wobei ein Schlagbohrhammer aufgrund der typischerweise mit einem Schlagbohrhammer durchgeführten Anwendungen eine besonders hohe Lebensdaueranforderung aufweist. Beispielsweise kann der Akku-Schrauber in seinem Kontaktbereich ein Kontaktmaterial der ersten Dichte aufweisen, also beispielsweise einen Kunststoff. Der Akku-Schrauber kann vorzugsweise mit einer Energieversorgungsvorrichtung des ersten Typs verbunden werden, wobei die Energieversorgungsvorrichtung des ersten Typs in ihrem Kontaktbereich vorzugsweise ein Kontaktmaterial der zweiten Dichte, also ein verschleißfestes Kontaktmaterial aufweist. In dieser Kombination - Akku-Schrauber , d.h. Werkzeugmaschine mit geringer Lebensdaueranforderung, und Energieversorgungsvorrichtung des ersten Typs, d.h. besonders leistungsstarke Energieversorgungsvorrichtung - kann die Schnittstelle eine Materialkombination Kunststoff (Kontaktmaterial mit einer ersten Dichte, auf Seiten der Werkzeugmaschine) und Metall (Kontaktmaterial mit einer zweiten Dichte, auf Seiten der Energieversorgungsvorrichtung) umfassen. Alternativ kann der Akku-Schrauber mit einer Energieversorgungsvorrichtung des zweiten Typs, d.h. einer weniger leistungsstarken Energieversorgungsvorrichtung verbunden werden, wobei die Energieversorgungsvorrichtung des zweiten Typs vorzugsweise in ihrem Kontaktbereich ein Kontaktmaterial der ersten Dichte aufweist. In dieser Kombination --Akku-Schrauber , d.h. Werkzeugmaschine mit geringer Lebensdaueranforderung, und Energieversorgungsvorrichtung des zweiten Typs, d.h. eine weniger leistungsstarke Energieversorgungsvorrichtung - kann die Schnittstelle eine Materialkombination Kunststoff (Kontaktmaterial mit einer ersten Dichte, auf Seiten der Werkzeugmaschine) und Kunststoff (Kontaktmaterial mit einer ersten Dichte, auf Seiten der Energieversorgungsvorrichtung) umfassen.

Die zweite Werkzeugmaschine kann in diesem Ausführungsbeispiel der Erfindung ein Schlagbohrhammer mit einer besonders hohen Lebensdaueranforderung sein. Das Kontaktmaterial in dem Kontaktbereich des Schlagbohrhammers kann vorzugsweise ein Kontaktmaterial der zweiten Dichte sein, also ein besonders verschleißfestes Material. Der Schlagbohrhammer kann vorzugsweise mit einer Energieversorgungsvorrichtung des ersten Typs verbunden werden, wobei die Energieversorgungsvorrichtung des ersten Typs in ihrem Kontaktbereich vorzugsweise ein Kontaktmaterial der zweiten Dichte, also ein verschleißfestes Kontaktmaterial aufweist. In dieser Kombination - Schlagbohrhammer, d.h. Werkzeugmaschine mit hoher Lebensdaueranforderung, und Energieversorgungsvorrichtung des ersten Typs, d.h. besonders leistungsstarke Energieversorgungsvorrichtung - kann die Schnittstelle eine Materialkombination Metall (Kontaktmaterial mit einer zweiten Dichte, auf Seiten der Werkzeugmaschine) und Metall (Kontaktmaterial mit einer zweiten Dichte, auf Seiten der Energieversorgungsvorrichtung) umfassen. Alternativ kann der Schlagbohrhammer mit einer Energieversorgungsvorrichtung des zweiten Typs, d.h. einer weniger leistungsstarken Energieversorgungsvorrichtung verbunden werden, wobei die Energieversorgungsvorrichtung des zweiten Typs vorzugsweise in ihrem Kontaktbereich ein Kontaktmaterial der ersten Dichte aufweist. In dieser Kombination - Schlagbohrhammer, d.h. Werkzeugmaschine mit besonders hoher Lebensdaueranforderung, und Energieversorgungsvorrichtung des zweiten Typs, d.h. eine weniger leistungsstarke Energieversorgungsvorrichtung - kann die Schnittstelle eine Materialkombination Metall (Kontaktmaterial mit einer zweiten Dichte, auf Seiten der Werkzeugmaschine) und Kunststoff (Kontaktmaterial mit einer ersten Dichte, auf Seiten der Energieversorgungsvorrichtung) umfassen.

Die zweite Werkzeugmaschine kann in diesem Ausführungsbeispiel der Erfindung ein Schlagbohrhammer mit einer besonders hohen Lebensdaueranforderung sein. Das Kontaktmaterial in dem Kontaktbereich des Schlagbohrhammers kann vorzugsweise ein Kontaktmaterial der zweiten Dichte sein, also ein besonders verschleißfestes Material. Der Schlagbohrhammer kann vorzugsweise mit einer Energieversorgungsvorrichtung des ersten Typs verbunden werden, wobei die Energieversorgungsvorrichtung des ersten Typs in ihrem Kontaktbereich vorzugsweise ein Kontaktmaterial der zweiten Dichte, also ein verschleißfestes Kontaktmaterial aufweist. In dieser Kombination - Schlagbohrhammer, d.h. Werkzeugmaschine mit hoher Lebensdaueranforderung, und Energieversorgungsvorrichtung des ersten Typs, d.h. besonders leistungsstarke Energieversorgungsvorrichtung - kann die Schnittstelle eine Materialkombination Metall (Kontaktmaterial mit einer zweiten Dichte, auf Seiten der Werkzeugmaschine) und Metall (Kontaktmaterial mit einer zweiten Dichte, auf Seiten der Energieversorgungsvorrichtung) umfassen. Alternativ kann der Schlagbohrhammer mit einer Energieversorgungsvorrichtung des zweiten Typs, d.h. einer weniger leistungsstarken Energieversorgungsvorrichtung verbunden werden, wobei die Energieversorgungsvorrichtung des zweiten Typs vorzugsweise in ihrem Kontaktbereich ein Kontaktmaterial der ersten Dichte aufweist. In dieser Kombination - Schlagbohrhammer, d.h. Werkzeugmaschine mit besonders hoher Lebensdaueranforderung, und Energieversorgungsvorrichtung des zweiten Typs, d.h. eine weniger leistungsstarke Energieversorgungsvorrichtung - kann die Schnittstelle eine Materialkombination Metall (Kontaktmaterial mit einer zweiten Dichte, auf Seiten der Werkzeugmaschine) und Kunststoff (Kontaktmaterial mit einer ersten Dichte, auf Seiten der Energieversorgungsvorrichtung) umfassen.

Mit anderen Worten besteht bei der Energieversorgungsvorrichtung des zweiten Typs vorzugsweise kein Unterschied zwischen dem Kontaktmaterial der Energieversorgungsvorrichtung und dem Grundmaterial der Schnittstelle. Es handelt sich bei der Verbindung zwischen der Werkzeugmaschine und der Energieversorgungsvorrichtung des zweiten Typs vorzugsweise um eine Verbindung zwischen einer Werkzeugmaschine und einer konventionelle Energieversorgungsvorrichtung, wobei die Verbindung zwischen der Werkzeugmaschine und der Energieversorgungsvorrichtung des ersten Typs eine Verbindung zwischen einer erfindungsgemäß modifizierten Energieversorgungsvorrichtung und einer Werkzeugmaschine darstellt. Es ist im Sinne der Erfindung bevorzugt, dass die vorgeschlagene Werkzeugmaschine und die verschiedenen Energieversorgungsvorrichtungen ein System bilden, wobei die Werkzeugmaschine sowohl von Energieversorgungsvorrichtungen des ersten Typs, als auch des zweiten Typs mit elektrischer Energie versorgt werden kann. Dadurch kann ein besonders flexibles System zur Energieversorgung einer Werkzeugmaschine bereitgestellt werden, wobei die Werkzeugmaschine vorteilhafterweise mit Energieversorgungsvorrichtungen des ersten und/oder des zweiten Typs mit elektrischer Energie versorgt werden können. Die Energieversorgungsvorrichtungen können sich beispielsweise durch ihre Kapazität, ihren Abgabestrom oder ihre Voltage unterscheiden, wobei selbstverständlich auch andere elektrische Größen als Unterscheidungsmerkmal in Frage kommen. Beispielsweise können Energieversorgungsvorrichtungen mit geringer Kapazität zur Energieversorgung der Werkzeugmaschine verwendet werden, wobei diese Energieversorgungsvorrichtungen beispielsweise Energieversorgungsvorrichtungen des zweiten Typs darstellen und ein Kontaktmaterial mit einer ersten Dichte aufweisen. Darüber hinaus können aber auch Energieversorgungsvorrichtungen mit einer hohen Kapazität zur Energieversorgung der Werkzeugmaschine verwendet werden. Diese Energieversorgungsvorrichtungen können beispielsweise über ein Kontaktmaterial mit einer zweiten Dichte verfügen und Energieversorgungsvorrichtungen des ersten Typs darstellen. Mit der Erfindung ist die vorgeschlagene Werkzeugmaschine besonders gut für den Übergang zu neuen und verbesserten Batterietechnologien geeignet. Wenn die neuen und verbesserten Energieversorgungsvorrichtungen beispielsweise erfindungsgemäße Hybrid-Linearführungen aufweisen, können diese mit der vorgeschlagenen Werkzeugmaschine zusammen verwendet werden. Daneben können aber auch konventionelle Energieversorgungsvorrichtungen mit älterer Batterietechnologien in der Werkzeugmaschine zur Energieversorgung verwendet werden. Darüber hinaus können Werkzeugmaschinen mit einer geringen Lebensdaueranforderung ein Kontaktmaterial einer ersten Dichte aufweisen und Werkzeugmaschinen hoher Lebensdaueranforderungen ein Schnittstellenmaterial einer zweiten Dichte, wie im obigen Ausführungsbeispiel beschrieben.

In einem zweiten Aspekt betrifft die Erfindung eine Schnittstelle zur lösbaren Verbindung einer Energieversorgungsvorrichtung mit einer Werkzeugmaschine, wobei die Energieversorgungsvorrichtung und die Werkzeugmaschine Verbindungspartner der Schnittstelle sind. Die Schnittstelle ist dadurch gekennzeichnet, dass die Schnittstelle ein Grundmaterial mit einer ersten Dichte aufweist und derart ausgebildet ist, dass die Schnittstelle eine Relativbewegung der Verbindungspartner in einer Einschubrichtung zulässt, wobei einer der Verbindungspartner einen erste Kontaktbereich aufweist, der so in Kontakt mit einem zweiten Kontaktbereich des anderen Verbindungspartners steht, dass eine Relativbewegungen der Verbindungspartner in den anderen Raumrichtungen verhindert wird, wobei der erste Kontaktbereich ein erstes Kontaktmaterial aufweist und der zweite Kontaktbereich ein zweites Kontaktmaterial aufweist, wobei das erste Kontaktmaterial und/oder das zweite Kontaktmaterial eine zweite Dichte aufweisen. Die Vorteile, technischen Wirkungen und Definitionen, die für das System beschrieben wurden, gelten vorzugsweise auch für die Schnittstelle, sowie für die Energieversorgungsvorrichtung und die Werkzeugmaschine, die im Folgenden beschrieben werden.

In einem weiteren Aspekt betrifft die Erfindung eine Werkzeugmaschine, wobei die Werkzeugmaschine einen zweiten Kontaktbereich zur lösbaren Verbindung der Werkzeugmaschine mit einer Energieversorgungsvorrichtung aufweist, wobei der zweite Kontaktbereich ein zweites Kontaktmaterial mit einer zweiten Dichte aufweist, wobei der zweite Kontaktbereich dazu eingerichtet ist, eine Relativbewegung der Werkzeugmaschine und der Energieversorgungsvorrichtung in einer Einschubrichtung zuzulassen und eine Relativbewegung zwischen der Werkzeugmaschine und der Energieversorgungsvorrichtung in den anderen Raumrichtungen zu verhindern. Es ist im Sinne der Erfindung bevorzugt, dass die Werkzeugmaschine in dem vorgeschlagenen System verwendet werden kann.

In einem weiteren Aspekt betrifft die Erfindung eine Energieversorgungsvorrichtung, die zur Versorgung einer Werkzeugmaschine mit elektrischer Energie mit der Werkzeugmaschine ausgebildet ist, wobei die Energieversorgungsvorrichtung einen ersten Kontaktbereich zur lösbaren Verbindung der Energieversorgungsvorrichtung mit einer Werkzeugmaschine aufweist, wobei der erste Kontaktbereich ein erstes Kontaktmaterial mit einer zweiten Dichte aufweist, wobei der erste Kontaktbereich dazu eingerichtet ist, eine Relativbewegung der Werkzeugmaschine und der Energieversorgungsvorrichtung in einer Einschubrichtung zuzulassen und eine Relativbewegung zwischen der Werkzeugmaschine und der Energieversorgungsvorrichtung in den anderen Raumrichtungen zu verhindern. Tests haben gezeigt, dass mit der Erfindung eine robuste, und langlebige Energieversorgungsvorrichtung bereitgestellt werden kann. Es ist im Sinne der Erfindung bevorzugt, dass die Energieversorgungsvorrichtung in dem vorgeschlagenen System verwendet werden kann.

Die vorgeschlagene Energieversorgungsvorrichtung kann beispielsweise auf den neuen und verbesserten Batterietechnologien beruhen und eine Lebensdauer von mindestens 600 Ladezyklen aufweisen. Dies entspricht bevorzugt einem Kapazitätsdurchsatz von mindestens 100 Ah/cm³ (Kapazität/Zellvolumen) bei gleichzeitigem Kapazitätsverlust von weniger als 30%. Wenn eine solche Energieversorgungsvorrichtung zur Versorgung einer Werkzeugmaschine mit elektrischer Energie verwendet wird, können mit der vorgeschlagenen Schnittstelle mehr als die bisher üblichen 2.500 Steck- oder Verbindungszyklen zwischen Energieversorgungsvorrichtung und Werkzeugmaschine durchgeführt werden, ohne dass es zu nennenswertem Verschleiß an der Schnittstelle kommt. Somit wird die Erfindung den zukünftigen Anforderungen an Schnittstellen, die sich aus den neuen und verbesserten Batterietechnologien ergeben, besonders gut gerecht und es können vorteilhafterweise besonders robuste, leistungsfähige und verschleißfeste Schnittstellen zur Verbindung einer Energieversorgungsvorrichtung mit einer Werkzeugmaschine bereitgestellt werden.

Mithin ist die Erfindung in der Lage, sowohl eine hohe Verschleißfestigkeit, als auch eine hohe Sicherheit gegen Lösen durch Beschleunigungskräfte zu gewährleisten, ohne die Betätigungskraft bei manuellem Lösen der Schnittstelle zu erhöhen. Solche Energieversorgungsvorrichtungen können vorzugsweise einen Kapazitätsdurchsatz von mindestens 100 Ah/cm³ (Kapazität/Zellvolumen) bei gleichzeitigem Kapazitätsverlust von weniger als 30% aufweisen. Das vorgeschlagene Plattformkonzept erlaubt darüber hinaus eine gemeinsame Verwendung von Schnittstellen mit verschiedenen Kontaktmaterialien, sowie die Verwendung von Hybrid-Linearführungen. Somit ist es möglich, vorteilhafterweise ohne Änderung der Schnittstelle des anderen Verbindungspartners, die kostenintensiveren Hybrid-Linearführungen insbesondere bei den Energieversorgungsvorrichtungen einzusetzen, die eine hohe Lebensdauerkapazitätsdichte aufweisen. Bei Energieversorgungsvorrichtungen, die eine geringere Lebensdauerkapazitätsdicht aufweisen, können vorteilhafterweise weniger kostenintensive Schnittstellen mit Kontaktmaterialien mit einer ersten Dichte verwendet werden. Vorteilhafterweise können die kostenintensiveren Hybrid-Linearführungen insbesondere bei den Werkzeugmaschinen eingesetzt werden, die eine hohe Lebensdaueranforderung aufweisen, dies vorzugsweise ohne eine wesentliche Änderung der Schnittstelle des anderen Verbindungspartners. Darüber hinaus können Werkzeugmaschinen, die eine geringere Lebensdaueranforderung aufweisen, vorteilhafterweise mit einer weniger kostenintensiven Schnittstellen mit Kontaktmaterialien einer ersten Dichte ausgestattet sein.

Die Verbesserungen in Bezug auf Robustheit und Lebensdauer sind besonders vorteilhaft, weil sich abzeichnet, dass sich die Lebensdauern von wiederaufladbaren Batterien und Akkumulatoren ("Akkus") aufgrund der verbesserten Batterietechnologien verlängern könnte. Es wird daher von der Fachwelt begrüßt werden, wenn mit der vorliegenden Erfindung Schnittstellenlösung für eine Energieversorgungsvorrichtung, insbesondere zur Verbindung mit einer Werkzeugmaschine, bereitgestellt werden kann, die der längeren Lebenszeit der zukünftigen Energieversorgungsvorrichtung gerecht wird.

Es ist im Sinne der Erfindung bevorzugt, dass die Energieversorgungsvorrichtung mindestens einer Energiespeicherzelle umfasst, die im Sinne der Erfindung als «Zelle» bezeichnet wird. Die mindestens eine Zelle weist einen Innenwiderstand DCR_I von kleiner als 10 Milliohm (mOhm) auf. In bevorzugten Ausgestaltungen der Erfindung kann der Innenwiderstand DCR_I der mindestens einen Zelle kleiner als 8 Milliohm und bevorzugt kleiner 6 Milliohm sein. Dabei wird der Innenwiderstand DCR_I vorzugsweise nach der Norm IEC61960 gemessen. Der Innenwiderstand DCR_I stellt insbesondere den Widerstand einer Zelle der Energieversorgungsvorrichtung dar, wobei etwaige Komponenten oder Zubehörteile der Zelle keinen Beitrag zum Innenwiderstand DCR_I leisten. Ein geringer Innenwiderstand DCR_I ist von Vorteil, da dadurch unerwünschte Wärme, die abgeführt werden muss, überhaupt nicht entsteht. Der Innenwiderstand DCR_I ist insbesondere ein Gleichstrom-Widerstand, der im Inneren einer Zelle der vorgeschlagenen Energieversorgungsvorrichtung gemessen werden kann. Selbstverständlich kann der Innenwiderstand DCR_I auch Zwischenwerte, wie 6,02 Milliohm; 7,49 Milliohm; 8,33 Milliohm; 8,65 Milliohm oder 9,5 Milliohm, annehmen.

Es hat sich gezeigt, dass mit dem Innenwiderstand DCR_I der mindestens einen Zelle von kleiner als 10 Milliohm eine Energieversorgungsvorrichtung bereitgestellt werden kann, die besonders gute thermische Eigenschaften in dem Sinne aufweist, dass sie besonders gut bei niedrigen Temperaturen betrieben werden kann, wobei der Kühlaufwand überraschend gering gehalten werden kann. Insbesondere ist eine Energieversorgungsvorrichtung mit einem Zell-Innenwiderstand DCR_I von kleiner als 10 Milliohm besonders gut geeignet, um besonders leistungsstarke Werkzeugmaschinen mit elektrischer Energie zu versorgen. Solche Energieversorgungsvorrichtungen können somit einen wertvollen Beitrag dazu leisten, einen Einsatz von akkubetriebenen Werkzeugmaschinen auch in solchen Anwendungsgebieten zu ermöglichen, von denen die Fachwelt bisher davon ausgegangen war, dass diese Anwendungsgebiete akkubetriebenen Werkzeugmaschinen nicht zugänglich sind.

Vorteilhafterweise kann mit eine solchen Energieversorgungsvorrichtung eine Möglichkeit dafür geschaffen werden, eine batterie- oder akkubetriebene Werkzeugmaschine mit einer erfindungsgemäßen Energieversorgungsvorrichtung über einen langen Zeitraum mit einer hohen Abgabeleistung zu versorgen, ohne die umliegenden Kunststoffbauteile oder die Zellchemie innerhalb der Zellen der Energieversorgungsvorrichtung zu schädigen.

Es ist im Sinne der Erfindung bevorzugt, dass ein Verhältnis eines Widerstands der mindestens einen Zelle zu einer Oberfläche A der mindestens einen Zelle kleiner als 0,2 Milliohm/cm² ist, bevorzugt kleiner als 0,1 Milliohm/cm² und am meisten bevorzugt kleiner als 0,05 Milliohm/cm². Bei einer zylindrischen Zelle kann die Oberfläche der Zelle beispielsweise von der Außenfläche des Zylinders, sowie der Oberseite und der Unterseite der Zelle gebildet werden. Es kann darüber hinaus im Sinne der Erfindung bevorzugt sein, dass ein Verhältnis eines Widerstands der mindestens einen Zelle zu einem Volumen V der mindestens einen Zelle kleiner als 0,4 Milliohm/cm³ ist, bevorzugt kleiner als 0,3 Milliohm/cm³ und am meisten bevorzugt kleiner als 0,2 Milliohm/cm³. Der Fachmann kennt für übliche geometrische Formen, wie Quader, Würfel, Kugel oder dergleichen, die Formeln zur Berechnung der Oberfläche oder des Volumens eines solchen geometrischen Körpers. Der Begriff «Widerstand» bezeichnet im Sinne der Erfindung bevorzugt den Innenwiderstand DCR_I, der vorzugsweise nach der Norm IEC61960 gemessen werden kann. Vorzugsweise handelt es sich dabei um einen Gleichstrom-Widerstand.

Es ist im Sinne der Erfindung bevorzugt, dass die mindestens eine Zelle einen Erwärmungskoeffizienten von kleiner als 1,0 W/(Ah·A) aufweist, bevorzugt kleiner als 0,75 W/(Ah·A) und besonders bevorzugt von kleiner als 0,5 W/(Ah·A). Darüber hinaus kann die mindestens eine Zelle dazu ausgebildet sein, im Wesentlichen konstant einen Strom von größer als 1.000 Ampère/Liter abzugeben. Die Angabe des Entladestroms erfolgt in Bezug auf das Volumen der mindestens einen Zelle, wobei als Einheit für das Volumen die Raum-Maßeinheit «Liter» (I) verwendet wird. Die erfindungsgemäßen Zellen sind somit in der Lage, pro Liter Zellvolumen einen Entladestrom von im Wesentlichen konstant größer als 1.000 A abzugeben. Mit anderen Worten ist eine Zelle mit einem Volumen von 1 Liter in der Lage, einen im Wesentlichen konstanten Entladestrom von größer als 1.000 A abzugeben, wobei die mindestens eine Zelle darüber hinaus einen Erwärmungskoeffizienten von kleiner als 1,0 W/(Ah·A) aufweist. In bevorzugten Ausgestaltungen der Erfindung kann die mindestens eine Zelle der vorgeschlagenen Energieversorgungsvorrichtung einen Erwärmungskoeffizienten von kleiner als 0,75 W/(Ah·A), bevorzugt kleiner als 0,5 W/ (Ah·A) aufweisen. Die Einheit des Erwärmungskoeffizienten lautet Watt / (Ampèrestunden · Ampère). Selbstverständlich kann der Erwärmungskoeffizient auch Zwischenwerte, wie 0,56 W/(Ah.A); 0,723 W/(Ah.A) oder 0,925 W/(Ah.A) aufweisen.

Die Erfindung ermöglicht vorteilhafterweise die Bereitstellung einer Energieversorgungsvorrichtung mit mindestens einer Zelle, die eine verringerte Erwärmung aufweist und somit besonders gut für die Versorgung von Werkzeugmaschine geeignet ist, bei denen hohe Leistungen und hohe Ströme, vorzugsweise Konstant-Ströme, für den Betrieb erwünscht sind. Insbesondere kann mit der Erfindung eine Energieversorgungsvorrichtung für eine Werkzeugmaschine bereitgestellt werden, bei der die Wärme, die gegebenenfalls bei Betrieb der Werkzeugmaschine und bei Abgabe von elektrischer Energie an die Werkzeugmaschine entsteht, besonders einfach und unkompliziert abgeführt werden kann. Tests haben gezeigt, dass mit der Erfindung nicht nur vorhandene Wärme besser abgeführt werden kann. Vielmehr wird mit der Erfindung verhindert, dass Wärme entsteht bzw. die bei Betrieb der Werkzeugmaschine erzeugte Wärmemenge kann mit der Erfindung erheblich reduziert werden. Vorteilhafterweise kann mit der Erfindung eine Energieversorgungsvorrichtung bereitgestellt werden, die vor allem auch solche Werkzeugmaschine optimal mit elektrischer Energie versorgen kann, die hohe Anforderungen an Leistung und Entladestrom stellen. Mit anderen Worten kann mit der Erfindung eine Energieversorgungsvorrichtung für besonders leistungsstarke Werkzeugmaschine bereitgestellt werden, mit denen beispielsweise auf Baustellen schwere Bohr- oder Abbrucharbeiten verrichtet werden.

Der Begriff «Werkzeugmaschine» ist im Sinne der Erfindung als typisches Gerät zu verstehen, dass auf einer Baustelle, beispielsweise einer Hochbau-Baustelle und/oder einer Tiefbau-Baustelle, verwendet werden kann. Es kann sich um Bohrhämmer, Meißelgeräte, Kernbohrgerät, Winkel- oder Trennschleifer, Trenngeräte oder dergleichen handeln, ohne darauf beschränkt zu sein. Darüber hinaus können Hilfsgeräte, wie sie gelegentlich auf Baustellen verwendet werden, wie Lampen, Radios, Staubsauger, Meßgeräte, Bau-Roboter, Schubkarren, Transportgeräte, Vorschubvorrichtungen oder andere Hilfsgeräte «Werkzeugmaschine» im Sinne der Erfindung sein. Die Werkzeugmaschine kann insbesondere eine mobile Werkzeugmaschine sein, wobei die vorgeschlagene Energieversorgungsvorrichtung insbesondere auch in stationären Werkzeugmaschinen, wie ständergeführten Bohrgeräten oder Kreissägen, zum Einsatz kommen kann. Bevorzugt sind aber handgeführte Werkzeugmaschinen, die insbesondere akku- oder batteriebetrieben sind.

Es ist im Sinne der Erfindung bevorzugt, dass die mindestens eine Zelle eine Temperatur-Abkühl-Halbwertzeit kleiner als 12 Minuten aufweist, bevorzugt kleiner 10 Minuten, besonders bevorzugt kleiner 8 Minuten. Das bedeutet im Sinne der Erfindung bevorzugt, dass sich bei freier Konvektion eine Temperatur der mindestens einen Zelle in weniger als 12, 10 oder 8 min halbiert. Die Temperatur-Abkühl-Halbwertzeit wird vorzugsweise in einem Ruhezustand der Energieversorgungsvorrichtung ermittelt, d.h. wenn die Energieversorgungsvorrichtung nicht in Betrieb, d.h. mit einer Werkzeugmaschine verbunden vorliegt. Vor allem Energieversorgungsvorrichtungen mit Temperatur-Abkühl-Halbwertzeiten von kleiner als 8 min haben sich als besonders geeignet für den Einsatz bei leistungsstarken Werkzeugmaschinen gezeigt. Selbstverständlich kann die Temperatur-Abkühl-Halbwertzeit auch einen Wert von 8,5 Minuten, 9 Minuten 20 Sekunden oder von 11 Minuten 47 Sekunden aufweisen.

Durch die überraschend geringe Temperatur-Abkühl-Halbwertzeit der vorgeschlagenen Energieversorgungsvorrichtung verweilt die im Betrieb der Werkzeugmaschine oder bei ihrem Laden erzeugte Wärme nur für kurze Zeit innerhalb der mindestens einen Zelle. Auf diese Weise kann die Zelle besonders schnell wieder aufgeladen werden und steht zügig für einen erneuten Einsatz in der Werkzeugmaschine zur Verfügung. Vielmehr kann die thermische Belastung der Komponente der Energieversorgungsvorrichtung oder der Werkzeugmaschine mit der vorgeschlagenen Energieversorgungsvorrichtung erheblich reduziert werden. Dadurch kann die Energieversorgungsvorrichtung geschont und ihre Lebenszeit verlängert werden.

Es ist im Sinne der Erfindung bevorzugt, dass die mindestens eine Zelle in einem Batteriepack der Energieversorgungsvorrichtung angeordnet ist. In dem Batteriepack können vorzugsweise eine Reihe von Einzelzellen zusammengefasst werden und auf diese Weise optimal in die Energieversorgungsvorrichtung eingefügt werden. Beispielsweise können 5, 6 oder 10 Zellen einen Batteriepack bilden, wobei auch ganzzahlige Vielfache dieser Zahlen möglich sind. Beispielsweise kann die Energieversorgungsvorrichtung einzelne Zellstränge aufweisen, die beispielsweise 5, 6 oder 10 Zellen umfassen können. Eine Energieversorgungsvorrichtung mit beispielsweise drei Strängen ä fünf Zellen kann beispielsweise 15 Einzelzellen umfassen.

Es ist im Sinne der Erfindung bevorzugt, dass die Energieversorgungsvorrichtung eine Kapazität von wenigstens 2,2 Ah, bevorzugt wenigstens 2,5 Ah aufweist. Tests haben gezeigt, dass die genannten Kapazitätswerte besonders gut für den Einsatz von leistungsstarken Werkzeugmaschinen im Baugewerbe geeignet sind und den dortigen Anforderungen an Verfügbarkeit von elektrischer Energie und möglicher Nutzungsdauer der Werkzeugmaschine besonders gut entsprechen.

Vorzugsweise ist die mindestens eine Zelle der Energieversorgungsvorrichtung dazu eingerichtet, einen Entladestrom über wenigstens 10 s von wenigstens 20 A abzugeben. Beispielsweise kann eine Zelle der Energieversorgungsvorrichtung dazu ausgebildet sein, einen Entladestrom über wenigstens 10 s von wenigstens 20 A, insbesondere wenigstens 25 A, bereitzustellen. Mit anderen Worten kann die mindestens eine Zelle einer Energieversorgungsvorrichtung dazu eingerichtet sein, einen Dauerstrom von wenigstens 20 A, insbesondere von wenigstens 25 A, bereitzustellen.

Gleichfalls ist es denkbar, dass Spitzenströme, insbesondere kurzzeitige Spitzenströme, zu einer starken Erwärmung der Energieversorgungsvorrichtung führen können. Daher ist eine Energieversorgungsvorrichtung mit einer leistungsstarken Kühlung, wie sie durch die vorliegend beschriebenen Maßnahmen erzielt werden kann, besonders vorteilhaft. Denkbar ist beispielsweise, dass die mindestens eine Zelle der Energieversorgungsvorrichtung über 1 Sekunde hinweg wenigstens 50 A bereitstellen kann. Mit anderen Worten ist es im Sinne der Erfindung bevorzugt, dass die mindestens eine Zelle der Energieversorgungsvorrichtung dazu eingerichtet ist, einen Entladestrom über wenigstens 1 s von wenigstens 50 A bereitzustellen. Werkzeugmaschinen können oftmals kurzzeitig hohe Leistungen benötigen. Eine Energieversorgungsvorrichtung, deren Zellen dazu in der Lage sind, einen derartigen Spitzenstrom und/oder einen derartigen Dauerstrom abzugeben, kann daher besonders geeignet für leistungsstarke Werkzeugmaschinen sein, wie sie auf Baustellen eingesetzt werden.

Es ist im Sinne der Erfindung bevorzugt, dass die mindestens eine Zelle einen Elektrolyten umfasst, wobei der Elektrolyt bei Raumtemperatur vorzugsweise in einem flüssigen Aggregatzustand vorliegt. Der Elektrolyt kann Lithium, Natrium und/oder Magnesium umfassen, ohne darauf beschränkt zu sein. Insbesondere kann der Elektrolyt Lithium-basiert sein. Alternativ oder ergänzend kann er auch Natrium-basiert sein. Denkbar ist auch, dass der Akkumulator Magnesium-basiert ist. Die elektrolyt-basierte Energieversorgungsvorrichtung kann eine Nennspannung von wenigstens 10 V, bevorzugt wenigstens 18 V, insbesondere von wenigstens 28 V, beispielsweise 36 V, aufweisen. Ganz besonders bevorzugt ist eine Nennspannung in einem Bereich von 18 bis 22 V, insbesondere in einem Bereich von 21 bis 22 V. Die mindestens eine Zelle der Energieversorgungsvorrichtung kann beispielsweise eine Spannung von 3,6 V aufweisen, ohne darauf beschränkt zu sein.

Es ist im Sinne der Erfindung bevorzugt, dass die Energieversorgungsvorrichtung beispielsweise mit einer Laderate von 1,5 C, bevorzugt 2 C und am meisten bevorzugt von 3 C geladen wird. Unter einer Laderate xC kann dabei die Stromstärke verstanden werden, die benötigt wird, um eine entladene Energieversorgungsvorrichtung in einem dem Zahlwert x der Laderate x C entsprechenden Bruchteil einer Stunde vollständig aufzuladen. Eine Laderate von 3 C ermöglicht beispielsweise ein vollständiges Aufladen des Akkumulators binnen 20 Minuten.

Es ist im Sinne der Erfindung bevorzugt, dass die mindestens Zelle der Energieversorgungsvorrichtung eine Oberfläche A und ein Volumen V aufweist, wobei ein Verhältnis A/V von Oberfläche zu Volumen größer ist als das Sechsfache, bevorzugt das Achtfache und besonders bevorzugt das Zehnfache des Kehrwerts der dritten Wurzel des Volumens.

Die Formulierung, dass die Oberfläche A der mindestens einen Zelle ist größer ist als beispielsweise das Achtfache der dritten Wurzel des Quadrats des Volumens V kann vorzugsweise auch durch die Formel ***A***>8****V***^(**2**/**3**) zum Ausdruck gebracht werden. In einer anderen Schreibweise kann dieser Zusammenhang dadurch beschrieben werden, dass das Verhältnis A/V von Oberfläche zu Volumen größer ist als das Achtfache des Kehrwerts der dritten Wurzel des Volumens.

Dabei sind zur Prüfung, ob die obige Relation erfüllt ist, stets Werte in der gleichen Grundeinheit einzusetzen. Wenn beispielsweise ein Wert für die Oberfläche in m² in die obige Formel eingesetzt wird, so wird für das Volumen vorzugsweise ein Wert in der Einheit m³ eingesetzt. Wenn beispielsweise ein Wert für die Oberfläche in der Einheit cm² in die obige Formel eingesetzt wird, so wird für das Volumen vorzugsweise ein Wert in der Einheit cm³ eingesetzt. Wenn beispielsweise ein Wert für die Oberfläche in der Einheit mm² in die obige Formel eingesetzt wird, so wird für das Volumen vorzugsweise ein Wert in der Einheit mm³ eingesetzt.

Zellgeometrien, die beispielsweise die Relation von ***A***>8****V***^(**2**/**3**) erfüllen, weisen vorteilhafterweise ein besonders günstiges Verhältnis zwischen der für die Kühlwirkung maßgeblichen Außenfläche der Zelle zum Zellvolumen auf. Dabei haben die Erfinder erkannt, dass das Verhältnis von Oberfläche zu Volumen der mindestens einen Zelle der Energieversorgungsvorrichtung einen wichtigen Einfluss auf die Entwärmung der Energieversorgungsvorrichtung hat. Die verbesserte Kühlfähigkeit der vorgeschlagenen Energieversorgungsvorrichtung kann vorteilhafterweise durch eine Erhöhung der Zelloberfläche bei gleichbleibendem Volumen und geringem Innenwiderstand der mindestens einen Zelle erreicht werden. Es ist im Sinne der Erfindung bevorzugt, dass eine geringe Zelltemperatur bei gleichzeitig hoher Leistungsabgabe vorzugsweise dann ermöglicht werden kann, wenn der Innenwiderstand der Zelle reduziert wird. Die Reduzierung des Innenwiderstands der mindestens einen Zelle kann zu einer geringeren Wärmeentstehung führen. Darüber hinaus kann eine geringe Zelltemperatur durch die Verwendung von Zellen, bei denen die Oberfläche A von mindestens einer Zelle innerhalb der Energieversorgungsvorrichtung größer ist als das Sechsfache, bevorzugt das Achtfache und besonders bevorzugt das Zehnfache der dritten Wurzel des Quadrats des Volumens V der mindestens einen Zelle. Dadurch kann insbesondere die Wärmeabgabe an die Umgebung verbessert werden.

Es hat sich gezeigt, dass Energieversorgungsvorrichtungen, deren Zellen die genannte Relation erfüllen, deutlich besser gekühlt werden können als bisher bekannte Energieversorgungsvorrichtungen mit beispielsweise zylinderförmigen Zellen. Die obige Relation kann beispielsweise dadurch erfüllt werden, dass die Zellen der vorgeschlagenen Energieversorgungsvorrichtung zwar eine zylinderförmige Grundform aufweisen, aber zusätzliche Oberflächen vergrößernde Elemente auf ihrer Oberfläche angeordnet sind. Dabei kann es sich beispielsweise um Rippen, Zähne oder dergleichen handeln. Es können im Rahmen der Erfindung auch Zellen verwendet werden, die keine zylinderförmige oder zylindrische Grundform aufweisen, sondern vollkommen anders geformt sind. Beispielsweise können die Zellen der vorgeschlagenen Energieversorgungsvorrichtung eine im Wesentlichen quader- oder würfelförmige Grundform aufweisen. Der Begriff "im Wesentlichen" ist dabei für den Fachmann nicht unklar, weil der Fachmann weiß, dass im Kontext der vorliegenden Erfindung beispielsweise auch ein Quader mit Einbuchtungen oder abgerundeten Ecken und/oder Kanten unter den Begriff "im Wesentlichen quaderförmig" fallen soll.

Es ist im Sinne der Erfindung bevorzugt, dass die mindestens eine Zelle einen Zellkern aufweist, wobei kein Punkt innerhalb des Zellkerns mehr als 5 mm von einer Oberfläche der Energieversorgungsvorrichtung entfernt ist. Wenn die Energieversorgungsvorrichtung entladen wird, beispielsweise wenn sie mit einer Werkzeugmaschine verbunden ist und mit der Werkzeugmaschine gearbeitet wird, kann im Zellkern Wärme entstehen. Diese Wärme kann in dieser konkreten Ausgestaltung der Erfindung auf verhältnismäßig kurzem Wege bis zur Oberfläche der Zelle der Energieversorgungsvorrichtung transportiert werden. Von der Oberfläche kann die Wärme optimal abgeführt werden. Somit kann eine solche Energieversorgungsvorrichtung eine gute Kühlung, insbesondere eine vergleichsweise gute Selbstkühlung, aufweisen. Die Zeitdauer bis zum Erreichen der Grenztemperatur kann verlängert und/oder das Erreichen der Grenztemperatur vorteilhafterweise gänzlich vermieden werden. Als weiterer Vorteil der Erfindung kann Innerhalb des Zellkerns eine verhältnismäßig homogene Temperaturverteilung erreicht werden. Hierdurch kann sich eine gleichmäßige Alterung des Akkumulators ergeben. Dies wiederum kann die Lebensdauer der Energieversorgungsvorrichtung erhöhen.

Es ist im Sinne der Erfindung bevorzugt, dass die mindestens eine Zelle eine maximale Konstant-Strom-Abgabe von größer als 20 Ampère, bevorzugt größer als 30 Ampère, am meisten bevorzugt größer 40 Ampère aufweist. Die maximale Konstant-Strom-Abgabe ist die Menge an Strom einer Zelle oder einer Energieversorgungsvorrichtung, die entnommen werden kann, ohne dass die Zelle oder die Energieversorgungsvorrichtung an eine Temperatur-Obergrenze gelangt. Mögliche Temperatur-Obergrenze können in einem Bereich von 60 °C oder 70 °C liegen, ohne darauf beschränkt zu sein. Die Einheit der maximalen Konstant-Strom-Abgabe ist Ampère.

Bei allen Wertebereichen, die im Kontext der vorliegenden Erfindung genannt werden, sollen stets auch alle Zwischenwerte als offenbart gelten. Als Beispiel sollen bei der maximalen Konstant-Strom-Abgabe auch Werte zwischen 20 und 30 A als offenbart gelten, also zum Beispiel 21; 22,3; 24, 25,55 oder 27,06 Ampère usw. Darüber hinaus sollen auch Werte zwischen 30 und 40 A als offenbart gelten, also zum Beispiel 32; 33,3; 36, 38,55 oder 39,07 Ampère usw.

Es ist im Sinne der Erfindung bevorzugt, dass die Energieversorgungsvorrichtung eine Entlade-C-Rate von größer als 80 · t^(-0,45) aufweist, wobei der Buchstabe "t" für die Zeit in der Einheit Sekunden steht. Die C-Rate ermöglicht vorteilhafterweise eine Quantifizierung der Lade- und Entladeströme für Energieversorgungsvorrichtungen, wobei die hier verwendete Enlade-C-Rate insbesondere die Quantifizierung der Entladeströme von Energieversorgungsvorrichtungen ermöglicht. Mit der C-Rate können beispielsweise die maximal zulässigen Lade- und Entladeströme angegeben werden. Diese Lade- und Entladeströme hängen vorzugsweise von der Nennkapazität der Energieversorgungsvorrichtung ab. Die ungewöhnlich hohe Entlade-C-Rate von 80 . t^(-0,45) bedeutet vorteilhafterweise, dass mit der vorgeschlagenen Energieversorgungsvorrichtung besonders hohe Entladeströme erreicht werden können, die für den Betrieb von leistungsstarken Werkzeugmaschinen im Baugewerbe erforderlich sind. Beispielsweise können die Entladeströme in einem Bereich von größer als 40 Ampère, bevorzugt größer als 60 Ampère oder noch mehr bevorzugt größer als 80 Ampère liegen.

Es ist im Sinne der Erfindung bevorzugt, dass die Zelle einen Zelltemperaturgradienten von kleiner 10 Kelvin aufweist. Der Zelltemperaturgradient ist vorzugsweise ein Maß für Temperaturunterschiede innerhalb der mindestens einen Zelle der vorgeschlagenen Energieversorgungsvorrichtung, wobei es im Sinne der Erfindung bevorzugt ist, dass die Zelle eine möglichst gleichmäßige Temperaturverteilung aufweist, d.h. dass eine Temperatur in einem inneren Bereich der Zelle möglichst wenig abweicht von einer Temperatur, die im Bereich einer Mantel- oder Außenfläche der Zelle gemessen wird.

Es ist im Sinne der Erfindung bevorzugt, dass eine Energieversorgungsvorrichtung mit den genannten Eigenschaften eine leistungsstarke Energieversorgungsvorrichtung darstellt, wie sie im Kontext der vorliegenden Erfindung beispielsweise als Energieversorgungsvorrichtung des ersten Typs bezeichnet wird. Solche Energieversorgungsvorrichtungen sind vorzugsweise dazu eingerichtet, besonders leistungsstarke Werkzeugmaschine mit elektrischer Energie zu versorgen. Vorzugsweise stellen die Energieversorgungsvorrichtungen mit den genannten Merkmalen Energieversorgungsvorrichtungen dar, die als Repräsentanten der zukünftigen Zelltechnologien betrachtet werden können.

Weitere Vorteile ergeben sich aus der folgenden Figurenbeschreibung. Die Figuren, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

In den Figuren sind gleiche und gleichartige Komponenten mit gleichen Bezugszeichen beziffert.

Es zeigen:
- Fig. 1: Ansicht einer bevorzugten Ausgestaltung des Systems
- Fig. 2: schematische Schnittdarstellung durch Werkzeugmaschine und Energieversorgungsvorrichtung
- Fig. 3: weitere schematische Schnittdarstellung durch eine Werkzeugmaschine und eine Energieversorgungsvorrichtung des ersten Typs
- Fig. 4: schematische Schnittdarstellung durch Werkzeugmaschine und Energieversorgungsvorrichtung des zweiten Typs
- Fig. 5: schematisch Darstellung einer bevorzugten Ausgestaltung des Systems
- Fig. 6: schematische Schnittdarstellung einer bevorzugten Ausgestaltung der Energieversorgungsvorrichtung
- Fig. 7: Ansicht einer bevorzugten Ausgestaltung der Schnittstelle im Bereich der Werkzeugmaschine

### Ausführungsbeispiele und Figurenbeschreibung:

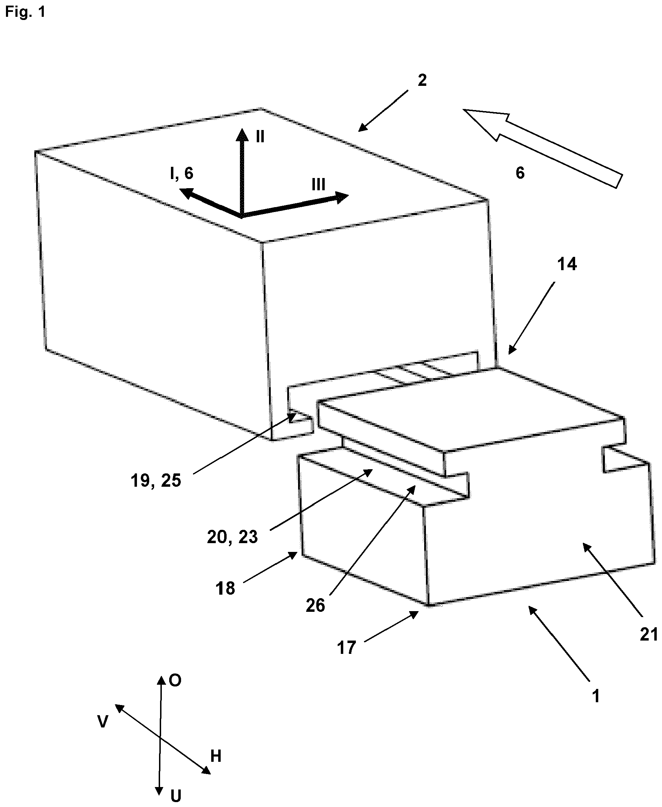

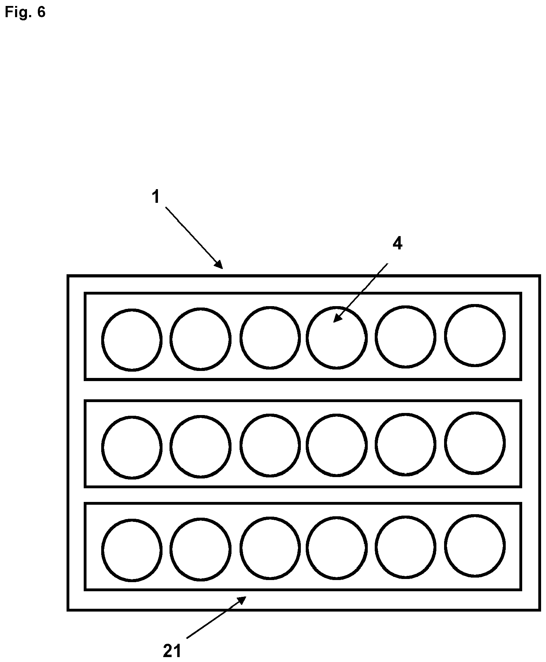

Figur 1 zeigt eine Ansicht einer bevorzugten Ausgestaltung des Systems 100. Dargestellt ist eine Energieversorgungsvorrichtung 1, die in eine Werkzeugmaschine 2 eingeführt werden kann, um die Werkzeugmaschine 2 mit elektrischer Energie zu versorgen. Die Energieversorgungsvorrichtung 1 kann beispielsweise in einen Hohlraum der Werkzeugmaschine 2 eingeführt werden oder in einen Aufnahmeschlitz der Werkzeugmaschine 2, wie in Fig. 1 dargestellt. Die Energieversorgungsvorrichtung 1 kann einen Batteriepack 21 umfassen, in dem Energiespeicherzellen 4 (siehe Fig. 6) enthalten sein können. Im oberen Bereich der Energieversorgungsvorrichtung 1 kann der Teilbereich der Schnittstelle 14, der zur Energieversorgungsvorrichtung 1 gehört, angeordnet sein. Der Teilbereich der Schnittstelle 14, der zur Energieversorgungsvorrichtung 1 gehört, kann den ersten Kontaktbereich 20 umfassen, der seinerseits das erste Kontaktmaterial 23 umfasst. Darüber hinaus könne der Teilbereich der Schnittstelle 14, der zur Energieversorgungsvorrichtung 1 gehört, Führungsflächen 26 umfassen, wobei die Führungsflächen 26 sowohl horizontal, als auch ausgebildet bzw. orientiert sein können. Die Schnittstelle 14 bildet vorzugsweise eine Linearführung, die das Einschieben der Energieversorgungsvorrichtung 1 in die Werkzeugmaschine 2 wesentlich erleichtern kann.

Die Werkzeugmaschine 2 weist vorzugsweise einen Teilbereich der Schnittstelle 14 auf, der zur Werkzeugmaschine 2 gehört. Dieser Teilbereich der Schnittstelle 14 auf, der zur Werkzeugmaschine 2 gehört, kann als Aufnahmevorrichtung zur Aufnahme des Teilbereichs der Schnittstelle 14, der zur Energieversorgungsvorrichtung 1 gehört, ausgebildet sein. Es ist im Sinne der Erfindung bevorzugt, dass die Teilbereiche der Schnittstelle 14 in dem Sinne korrespondierend ausgebildet sind, dass die Energieversorgungsvorrichtung 1 in die Werkzeugmaschine 2 einführt werden kann, um sie später dort zu befestigen und die Werkzeugmaschine 2 mit elektrischer Energie zu versorgen. Die Einschubrichtung 6, entlang der die Energieversorgungsvorrichtung 1 in die Werkzeugmaschine 2 eingeschoben werden kann, ist in Fig. 1 mit einem Pfeil dargestellt. Die Einschubrichtung 6 fällt vorzugsweise zusammen mit einer ersten Raumachse ! eines virtuellen Koordinatensystems, das zur Beschreibung der Erfindung verwendet wird. Die Energieversorgungsvorrichtung 1 ist dazu eingerichtet, eine Werkzeugmaschine 2 mit elektrischer Energie zu versorgen. Zu diesem Zweck kann die Energieversorgungsvorrichtung 1 in einen Hohlraum der Werkzeugmaschine 2 eingeführt werden. Das Einführen der Energieversorgungsvorrichtung 1 in die Werkzeugmaschine 2 erfolgt entlang einer Einschubrichtung 6, die vorzugsweise mit einer ersten Achse I eines virtuellen Koordinatensystems, das zur Beschreibung der Erfindung verwendet wird, zusammenfällt. Das virtuelle Koordinatensystem umfasst darüber hinaus eine zweite Achse II und eine dritte Achse III.

Insbesondere umfasst der Teilbereich der Schnittstelle 14 auf, der zur Werkzeugmaschine 2 gehört, den zweiten Kontaktbereich 19, der das zweite Kontaktmaterial 25 umfasst.

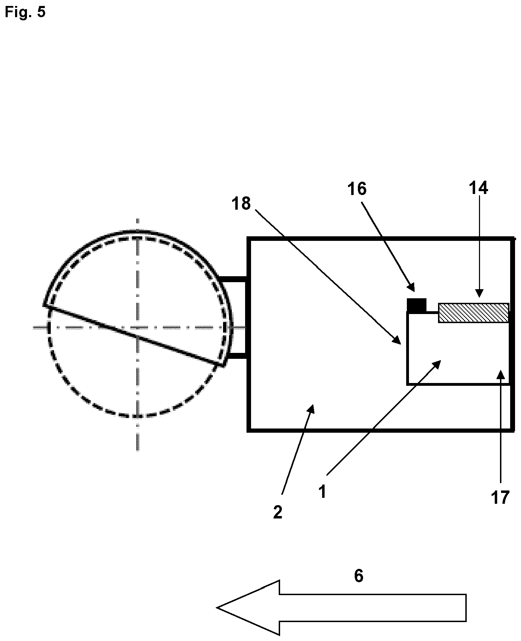

Zur Verbindung der Energieversorgungsvorrichtung 1 mit der Werkzeugmaschine 2 weist die Energieversorgungsvorrichtung 1 eine Schnittstelle 14 auf, die vorzugsweise eine mechanische Schnittstelle darstellt. Die in Fig. 1 dargestellte Schnittstelle 14 liegt auf einer Oberseite der Energieversorgungsvorrichtung 1 vor. In einem vorderen Bereich 18 der Energieversorgungsvorrichtung 1 weist die Energieversorgungsvorrichtung 1 eine Daten- und/oder Leistungsschnittstelle 16 (vgl. Fig. 5) auf, die dafür genutzt werden kann, im verbundenen Zustand Daten zwischen der Energieversorgungsvorrichtung 1 und der Werkzeugmaschine 2 auszutauschen oder um elektrische Energie von der Energieversorgungsvorrichtung 1 in Richtung der Werkzeugmaschine 2 zu übertragen. In einem hinteren Bereich 17 kann die Energieversorgungsvorrichtung 1 einen Verriegelungsmechanismus zur Befestigung der Energieversorgungsvorrichtung 1 in der Werkzeugmaschine 2 aufweisen. Die Energieversorgungsvorrichtung 1 kann einen Batteriepack 21 umfassen, der den unteren Bereich der Energieversorgungsvorrichtung 1 bildet.

Die Schnittstelle 14 ist derart ausgebildet ist, dass die Schnittstelle 14 eine Relativbewegung der Werkzeugmaschine 2 und der Energieversorgungsvorrichtung 1 in einer Einschubrichtung 6 zulässt, wobei der erste Kontaktbereich 20 mit dem zweiten Kontaktbereich 19 in einem eingeschobenen Zustand so in Kontakt steht, dass eine Relativbewegung zwischen der Werkzeugmaschine 2 und der Energieversorgungsvorrichtung 1 in den anderen Raumrichtungen verhindert wird. Dadurch kann die Energieversorgungsvorrichtung 1 besonders sicher und stabil in der Werkzeugmaschine 2 gehalten werden, auch bei auftretenden Vibrationen und Erschütterungen.

Die Einschubrichtung 6 fällt vorzugsweise zusammen mit einer ersten Raumachse ! eines virtuellen Koordinatensystems, das zur Beschreibung der Erfindung verwendet wird, während die anderen Raumrichtungen den Raumrichtungen II und III des virtuellen Koordinatensystems entsprechen. Das virtuelle Koordinatensystem ist ebenfalls in Fig. 1 dargestellt, ebenso wie ein Richtungskreuz, das die Raumrichtungen «nach vorne V», «nach hinten H», «nach oben O» und «nach unten U» angibt und mit den entsprechenden Buchstaben bezeichnet: V, H, O und U.

Der Teilbereich der Schnittstelle 14 auf, der zur Werkzeugmaschine 2 gehört, den zweiten Kontaktbereich 19, der das zweite Kontaktmaterial 25 umfasst. An der Werkzeugmaschine 2 liegt ein zweiter Kontaktbereich 19 angeordnet vor, der ein zweites Kontaktmaterial 25 aufweist, wobei mindestens eines der Kontaktmaterialien 23, 25 eine zweite Dichte aufweist, die größer ist als eine erste Dichte des Grundmaterials 15. Vorzugsweise kann sowohl die Energieversorgungsvorrichtung 1, als auch die Werkzeugmaschine 2 ein Grundmaterial 15 umfassen, das beispielsweise ein Kunststoff sein kann. Die Energieversorgungsvorrichtung 1 und die Werkzeugmaschine 2 können als Verbindungspartner der Schnittstelle 14 bezeichnet werden, wobei die Energieversorgungsvorrichtung 1 und die Werkzeugmaschine 2 im Bereich der Schnittstelle 14 zumindest abschnittsweise das Grundmaterial 15 umfassen kann. Mindestens einer der Kontaktbereiche 19, 20 der Schnittstelle 14 umfasst darüber hinaus ein Kontaktmaterial 23, 25 mit einer zweiten Dichte, wobei das Kontaktmaterial 23, 25 mit der zweiten Dichte vorzugsweise besonders verschleißfest und widerstandfähig ist. Das Kontaktmaterial 23, 25 mit einer zweiten Dichte kann in Form von Einlege-Teilen oder Einlegern in Vertiefungen im Grundmaterial 15 eingelegt werden. Es kann aber auch bevorzugt sein, dass die einzelnen Flächen der Kontaktbereiche 19, 20 ganz oder teilweise mit dem Kontaktmaterial 23, 25 der zweiten Dichte beschichtet sind oder dass die Kontaktbereich 19, 20 mit Blechen aus dem Kontaktmaterial 23, 25 mit der zweiten Dichte ausgekleidet sind. Das Kontaktmaterial 23, 25 mit einer zweiten Dichte kann entweder in einem der Kontaktbereiche 19, 20 vorliegen oder an beiden Kontaktbereichen 19, 20.

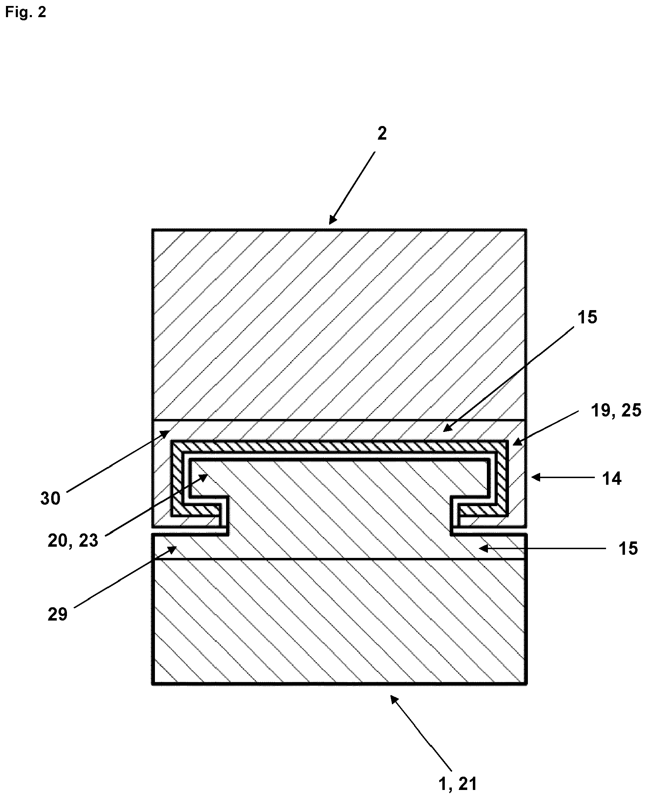

In Figur 2 zeigt eine schematische Schnittdarstellung durch Werkzeugmaschine 2 und Energieversorgungsvorrichtung 1, wobei insbesondere ein Ausführungsbeispiel der Erfindung gezeigt wird, bei dem der zweite Kontaktbereich 19 der Werkzeugmaschine 2 das Kontaktmaterial 25 mit einer zweiten Dichte umfasst. Mit anderen Worten ist der zweite Kontaktbereich 19 der Werkzeugmaschine 2 mit dem zweiten Kontaktmaterial 25, das eine zweite Dichte aufweist und besonders verschleißfest ist, beschichtet, überzogen oder ausgekleidet.

In den Fig. 2-4 sind auch der erste Schnittstellen-Körper 29 und der zweite Schnittstellen-Körper 30 eingezeichnet. Der erste Schnittstellen-Körper 29 liegt vorzugsweise an der Energieversorgungsvorrichtung 1 angeordnet vor, während der zweite Schnittstellen-Körper 30 vorzugsweise an der Werkzeugmaschine 2 angeordnet vorliegt. Die Schnittstellen-Körper 29, 30 stellen die Raumbereich der Energieversorgungsvorrichtung 1 und der Werkzeugmaschine 2 dar, die die Schnittstelle 14 bilden. In Bezug auf die Energieversorgungsvorrichtung 1 kann sich dabei beispielsweise um eine Kunststoffplatte handeln, die beispielsweise auf der Oberseite des Batteriepacks 21 angeordnet sein kann. In Bezug auf die Werkzeugmaschine 2 kann es sich beispielsweise um den Aufnahmebereich handeln, der den Kontaktbereich 19 der Werkzeugmaschine 2 bilden kann. Es ist im Sinne der Erfindung bevorzugt, dass die Schnittstellen-Körper 29, 30 das Grundmaterial 15 umfassen oder aus ihm gebildet sind. In Fig. 2 weist der Kontaktbereich 19 der Werkzeugmaschine 2 das Kontaktmaterial 25 mit der zweiten Dichte auf, so dass der Teilbereich der Schnittstelle 14, der zur Werkzeugmaschine 2 gehört, vorzugsweise aus mindestens zwei Materialien gebildet ist, nämlich dem Grundmaterial 15 mit einer ersten Dichte und dem Kontaktmaterial 25 mit einer zweiten Dichte, die vorzugsweise größer ist als die erste Dichte. Das Grundmaterial 15 des zweiten Schnittstellen-Körpers 30 kann beispielsweise mit dem zweiten Kontaktmaterial 25 mit der zweiten Dichte überzogen, beschichtet oder ausgekleidet sein.

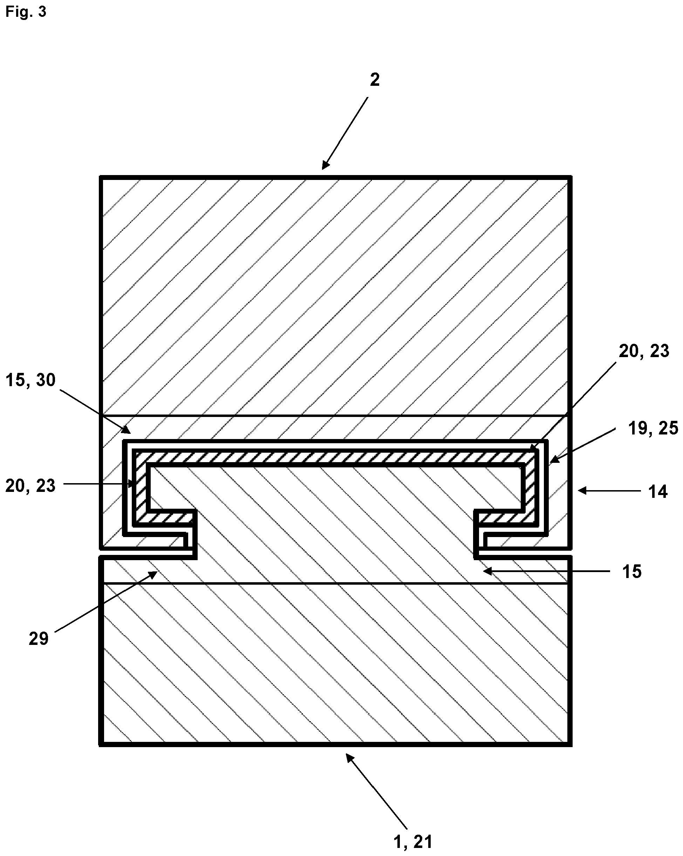

In Figur 3 zeigt eine schematische Schnittdarstellung durch Werkzeugmaschine 2 und Energieversorgungsvorrichtung 1, wobei insbesondere ein Ausführungsbeispiel der Erfindung gezeigt wird, bei dem der erste Kontaktbereich 20 der Energieversorgungsvorrichtung 1 das Kontaktmaterial 23 mit einer zweiten Dichte umfasst. Mit anderen Worten ist der erste Kontaktbereich 20 der Energieversorgungsvorrichtung 1 mit dem ersten Kontaktmaterial 23, das eine zweite Dichte aufweist und besonders verschleißfest ist, beschichtet, überzogen oder ausgekleidet. Fig. 3 zeigt insbesondere eine Werkzeugmaschine 2 und eine Energieversorgungsvorrichtung 1 des ersten Typs, bei dem das Kontaktmaterial 23 mit einer zweiten Dichte an der Energieversorgungsvorrichtung 1 angeordnet vorliegt.

In Fig. 3 weist der erste Kontaktbereich 20 der Energieversorgungsvorrichtung 1 das Kontaktmaterial 23 mit der zweiten Dichte auf, so dass der Teilbereich der Schnittstelle 14, der zur Energieversorgungsvorrichtung 1 gehört, vorzugsweise aus mindestens zwei Materialien gebildet ist, nämlich dem Grundmaterial 15 mit einer ersten Dichte und dem Kontaktmaterial 22 mit einer zweiten Dichte, die vorzugsweise größer ist als die erste Dichte. Das Grundmaterial 15 des ersten Schnittstellen-Körpers 30 kann beispielsweise mit dem ersten Kontaktmaterial 23 mit der zweiten Dichte überzogen, beschichtet oder ausgekleidet sein.

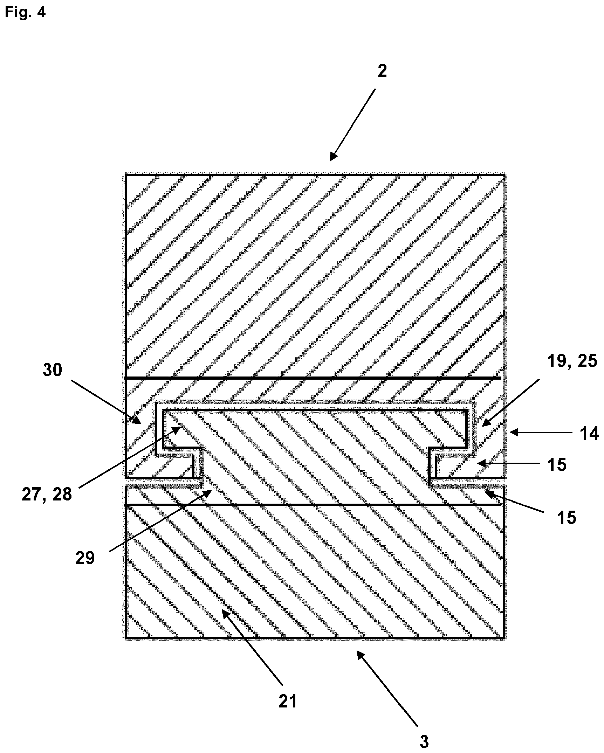

Fig. 4 zeigt eine schematische Schnittdarstellung durch eine Werkzeugmaschine 2 und eine Energieversorgungsvorrichtung 3 des zweiten Typs. Die zweite Energieversorgungsvorrichtung 3 weist auch einen Schnittstellen-Körper 29 auf, der ein Grundmaterial 15 umfasst oder aus diesem gebildet ist. Der Schnittstellen-Körper 29 umfasst den dritten Kontaktbereich 27 der Energieversorgungsvorrichtung 3, wobei der dritte Kontaktbereich 27 das Kontaktmaterial 28 umfasst. Das Kontaktmaterial 28 kann dem Grundmaterial 15 entsprechen und eine im Wesentlichen gleiche oder ähnliche Dichte aufweisen, die vorzugsweise der ersten Dichte entspricht. Insbesondere zeigt Fig. 4 eine Kombination aus einer Werkzeugmaschine 2 mit einer Energieversorgungsvorrichtung 3 des zweiten Typs, die zusammen mit einer Energieversorgungsvorrichtung 1 des zweiten Typs ein System zur Versorgung von Werkzeugmaschine mit elektrischer Energie bilden können. Dabei kann die Werkzeugmaschine 2 von Energieversorgungsvorrichtungen 1, 3 mit elektrischer Energie versorgt werden, wobei sich die Energieversorgungsvorrichtungen 1, 3 insbesondere in dem verwendeten Kontaktmaterial 23, 28, das den jeweiligen Kontaktbereich 20, 27 bildet, unterscheidet. Die Spannung der Energieversorgungsvorrichtungen 1, 3 ist vorzugsweise bei allen Energieversorgungsvorrichtungen 1, 3 des Systems 100 im Wesentlichen gleich; sie kann beispielsweise in einem Bereich von 10 bis 30 V, bevorzugt 15 bis 25 V, besonders bevorzugt 18 bis 22 V liegen. Das System 100 bildet vorteilhafterweise eine Energieversorgungsplattform für Werkzeugmaschinen 2, bei dem die Werkzeugmaschine 2 von unterschiedlich ausgebildeten Energieversorgungsvorrichtungen 1, 3 mit elektrischer Energie versorgt werden kann.

Fig. 5 zeigt eine Ansicht einer bevorzugten Ausgestaltung einer Werkzeugmaschine 2. Die Werkzeugmaschine 2 kann in üblicher weise ein Werkzeug, Bedienelemente und/oder Griffe umfassen. Die Werkzeugmaschine 2 kann insbesondere auch einen Motor (nicht dargestellt) aufweisen. Die Werkzeugmaschine 2 kann mit einer Energieversorgungsvorrichtung 1 verbunden werden («verbundenen Zustand»), um zu ermöglichen, dass die Energieversorgungsvorrichtung 1 die Werkzeugmaschine 2 mit elektrischer Energie versorgt. Die Energieversorgungsvorrichtung 1 kann eine Schnittstelle 14 aufweisen, die mit einer Werkzeugmaschine 2 zusammenwirken kann. Die Energieversorgungsvorrichtung 1 weist auf ihrer Oberseite eine Datenund/oder Leistungsschnittstelle 16 auf. Die Daten- und/oder Leistungsschnittstelle 16 kann in einem vorderen Bereich 18 der Energieversorgungsvorrichtung 1 angeordnet vorliegen, während der Verriegelungsmechanismus in einem hinteren Bereich 17 der Energieversorgungsvorrichtung 1 angeordnet vorliegt.

Figur 6 zeigt eine schematische Seitenansicht einer bevorzugten Ausgestaltung der Energieversorgungsvorrichtung 1. Die in Fig. 6 dargestellte Energieversorgungsvorrichtung 1 weist achtzehn Zellen 4 auf, wobei die achtzehn Zellen 4 in drei Strängen innerhalb der Energieversorgungsvorrichtung 1 angeordnet vorliegen. Die Zellen 4 werden insbesondere durch die Kreise symbolisiert, während die Stränge durch die länglichen Rechtecke symbolisiert werden, die die Kreise («Zellen 4») umgeben.

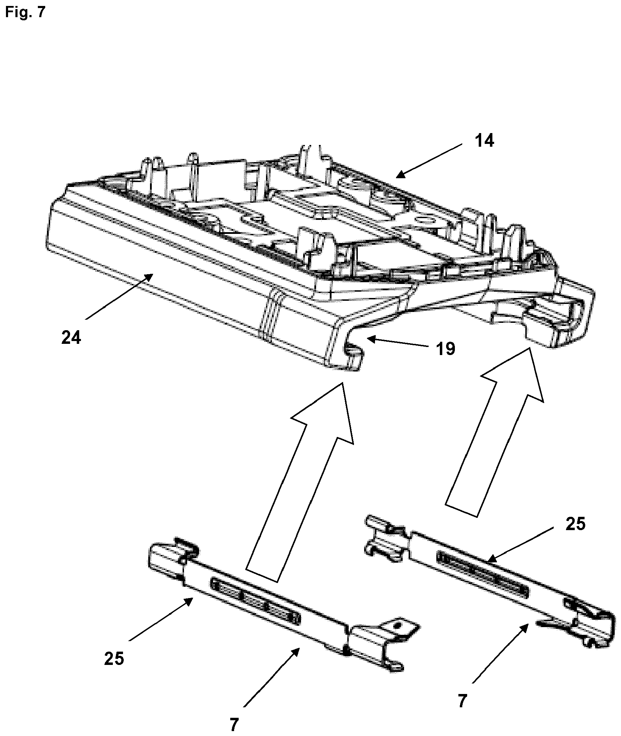

Figur 7 zeigt eine bevorzugte Ausgestaltung der Schnittstelle 14 im Bereich der Werkzeugmaschine 2 (nicht dargestellt). Dargestellt ist in dem oberen Bereich der Fig. 7 eine Schnittstellenbereich der Werkzeugmaschine 2, der vorzugsweise eine Aufnahmevorrichtung 24 zur Aufnahme des Kontaktbereichs 20 einer Energieversorgungsvorrichtung 1 (in Fig. 7 nicht dargestellt) eingerichtet ist. Im unteren Bereich der Fig. 7 sind Einlegeteile bzw. Einleger 7 dargestellt, die in dem Kontaktbereich 19 der Werkzeugmaschine 2 integriert vorliegen können. Beispielsweise können die Einlegeteile bzw. Einleger 7 durch ein Spritzgussverfahren in die Aufnahmevorrichtung 24 der Werkzeugmaschine 2 eingebracht werden, um die Langlebigkeit und die Robustheit der Schnittstelle 14 zu erhöhen. Die Einlegeteile bzw. Einleger 7 können vorzugsweise eine Kontaktmaterial 25 mit einer zweiten Dichte umfassen und besonders verschleißfest ausgebildet sein. Vorzugsweise können die Einlegeteile bzw. Einleger 7 ganz oder teilweise aus einem Metall oder einer Metall-Legierung gefertigt sein. Die Einlegeteile bzw. Einleger 7 verstärken vorteilhafterweise den Kontaktbereich 19 der Werkzeugmaschine 2, so dass die Schnittstelle 14 den hohen mechanischen und elektrischen Anforderungen zukünftiger Batterietechnologien gewachsen ist. Selbstverständlich können die Einlegeteile bzw. Einleger 7 auch in den Kontaktbereichen 20, 27 der Energieversorgungsvorrichtungen 1, 3 vorgesehen sein. Für eine besonders langlebige Schnittstelle 14 können sowohl Werkzeugmaschine 2, als auch Energieversorgungsvorrichtung 1, 3 ein Kontaktmaterial 23, 25 einer zweiten Dichte aufweisen.

### Bezugszeichenliste

- 1: erste Energieversorgungsvorrichtung
- 2: Werkzeugmaschine
- 3: zweite Energieversorgungsvorrichtung
- 4: Zelle einer Energieversorgungsvorrichtung
- 6: Einschubrichtung
- 7: Einleger bzw. Einlegeteile
- 14: Schnittstelle der Energieversorgungsvorrichtung
- 15: Grundmaterial
- 16: Daten- und Leistungsschnittstelle
- 17: hinterer Bereich der Energieversorgungsvorrichtung
- 18: vorderer Bereich der Energieversorgungsvorrichtung
- 19: zweiter Kontaktbereich
- 20: erster Kontaktbereich
- 21: Batteriepack
- 23: erstes Kontaktmaterial
- 24: Aufnahmevorrichtung
- 25: zweites Kontaktmaterial
- 26: Führungsfläche
- 27: dritter Kontaktbereich
- 28: drittes Kontaktmaterial
- 29: erster Schnittstellen-Körper
- 30: zweiter Schnittstellen-Körper
- O: Raumrichtung «nach oben»
- U: Raumrichtung «nach unten»
- V: Raumrichtung «nach vorne»
- H: Raumrichtung «nach hinten»
- I: Achse 1 des virtuellen Koordinatensystems, «erste Raumachse»
- II: Achse 2 des virtuellen Koordinatensystems, «zweite Raumachse», eine der anderen Raumrichtungen
- III: Achse 3 des virtuellen Koordinatensystems, «dritte Raumachse», eine der anderen Raumrichtungen

## Patentansprüche

1. System (100) umfassend eine Werkzeugmaschine (2) und eine Energieversorgungsvorrichtung (1), wobei die Werkzeugmaschine (2) über eine Schnittstelle (14) lösbar mit der Energieversorgungsvorrichtung (1) verbindbar ist,
**dadurch gekennzeichnet, dass**
die Schnittstelle (14) ein Grundmaterial (15) mit einer ersten Dichte umfasst und derart ausgebildet ist, dass die Schnittstelle (14) eine Relativbewegung der Werkzeugmaschine (2) und der Energieversorgungsvorrichtung (1) in einer Einschubrichtung (6) zulässt, wobei die Energieversorgungsvorrichtung (1) einen ersten Kontaktbereich (20) mit einem ersten Kontaktmaterial (23) aufweist und die Werkzeugmaschine (2) einen zweiten Kontaktbereich (19) mit einem zweiten Kontaktmaterial (25) aufweist, wobei der erste Kontaktbereich (20) mit dem zweiten Kontaktbereich (19) in einem eingeschobenen Zustand so in Kontakt steht, dass eine Relativbewegung zwischen der Werkzeugmaschine (2) und der Energieversorgungsvorrichtung (1) in den anderen Raumrichtungen verhindert wird, wobei das erste Kontaktmaterial (23) und/oder das zweite Kontaktmaterial (25) eine zweite Dichte aufweisen, wobei die zweite Dichte größer ist als die erste Dichte.

2. System (100) nach Anspruch 1
**dadurch gekennzeichnet, dass**
die zweite Dichte in einem Bereich von größer als 3,0 g/cm³, bevorzugt größer als 4 g/cm³ liegt.

3. System (100) nach Anspruch 1 oder 2
**dadurch gekennzeichnet, dass**
die erste Dichte in einem Bereich von kleiner als 3,0 g/cm³, bevorzugt kleiner als 2 g/cm³ liegt.

4. System (100) nach einem der vorhergehenden Ansprüche
**dadurch gekennzeichnet, dass**
eine Oberflächenhärte des Kontaktmaterials (23 und/oder 25), das eine zweite Dichte aufweist, in einem Bereich von größer als 90 HV liegt, bevorzugt in einem Bereich größer als 100 HV.

5. System (100) nach einem der vorhergehenden Ansprüche
**dadurch gekennzeichnet, dass**
das Kontaktmaterial (23 und/oder 25), das eine zweite Dichte aufweist, ein Metall, eine Metalllegierung und/oder eine Metallbeschichtung ist.

6. System (100) nach einem der vorhergehenden Ansprüche
**dadurch gekennzeichnet, dass**
das Kontaktmaterial (23 und/oder 25), das eine zweite Dichte aufweist, einen PREN-Wert von größer als 10, bevorzugt größer 13 und am meisten bevorzugt größer als 15 aufweist.

7. System (100) nach einem der vorhergehenden Ansprüche
**dadurch gekennzeichnet, dass**
der Kontaktbereich (19 und/oder 20), der das Kontaktmaterial mit der zweiten Dichte aufweist, einen Anteil von größer als 5 % an einer Führungsfläche (26) zwischen der Werkzeugmaschine (2) und der Energieversorgungsvorrichtung (1) ausmacht.

8. System (100) nach einem der vorhergehenden Ansprüche
**dadurch gekennzeichnet, dass**
die Energieversorgungsvorrichtung (1) einen ersten Schnittstellen-Körper (29) aufweist und die Werkzeugmaschine (2) einen zweiten Schnittstellen-Körper (30) aufweist, wobei ein Anteil des Kontaktmaterials (23 und/oder 25), das eine zweite Dichte aufweist, an dem ersten Schnittstellen-Körper (29) und/oder an dem zweiten Schnittstellen-Körper (30) kleiner als 10 % ist.

9. System (100) nach einem der vorhergehenden Ansprüche, wobei das System (100) eine zweite Energieversorgungsvorrichtung (3) umfasst, wobei die Werkzeugmaschine (2) sowohl mit der ersten Energieversorgungsvorrichtung (1), als auch mit der zweiten Energieversorgungsvorrichtung (3) lösbar über eine Schnittstelle (14) verbindbar ist, um elektrische Energie zu beziehen,
**dadurch gekennzeichnet, dass**
die Schnittstelle (14) ein Grundmaterial (15) mit einer ersten Dichte umfasst und derart ausgebildet ist, dass die Schnittstelle (14) eine Relativbewegung der Werkzeugmaschine (2) und der Energieversorgungsvorrichtungen (1, 3) in einer Einschubrichtung zulässt, wobei die zweite Energieversorgungsvorrichtung (3) einen dritten Kontaktbereich (27) mit einem dritten Kontaktmaterial (28) aufweist, wobei der dritte Kontaktbereich (20) mit dem zweiten Kontaktbereich (19) in einem eingeschobenen Zustand so in Kontakt steht, dass eine Relativbewegung zwischen der Werkzeugmaschine (2) und der Energieversorgungsvorrichtung (3) in den anderen Raumrichtungen verhindert wird, wobei das dritte Kontaktmaterial (28) die erste Dichte aufweist.

10. Schnittstelle (14) zur lösbaren Verbindung einer Energieversorgungsvorrichtung (1) mit einer Werkzeugmaschine (2), wobei die Energieversorgungsvorrichtung (1) und die Werkzeugmaschine (2) Verbindungspartner der Schnittstelle (14) sind,
**dadurch gekennzeichnet, dass**
die Schnittstelle (14) ein Grundmaterial (15) mit einer ersten Dichte aufweist und derart ausgebildet ist, dass die Schnittstelle (14) eine Relativbewegung der Verbindungspartner (1 und 2) in einer Einschubrichtung zulässt, wobei einer der Verbindungspartner (1 oder 2) einen erste Kontaktbereich aufweist, der so in Kontakt mit einem zweiten Kontaktbereich des anderen Verbindungspartners (2 oder 1) steht, dass eine Relativbewegungen der Verbindungspartner (1 und 2) in den anderen Raumrichtungen verhindert wird, wobei der erste Kontaktbereich ein erstes Kontaktmaterial aufweist und der zweite Kontaktbereich ein zweites Kontaktmaterial aufweist, wobei das erste Kontaktmaterial und/oder das zweite Kontaktmaterial eine zweite Dichte aufweisen.

11. Werkzeugmaschine (2)
**dadurch gekennzeichnet, dass**
die Werkzeugmaschine (2) einen zweiten Kontaktbereich (19) zur lösbaren Verbindung der Werkzeugmaschine (2) mit einer Energieversorgungsvorrichtung (1) aufweist, wobei der zweite Kontaktbereich (19) ein zweites Kontaktmaterial (25) mit einer zweiten Dichte aufweist, wobei der zweite Kontaktbereich (19) dazu eingerichtet ist, eine Relativbewegung der Werkzeugmaschine (2) und der Energieversorgungsvorrichtung (1) in einer Einschubrichtung zuzulassen und eine Relativbewegung zwischen der Werkzeugmaschine (2) und der Energieversorgungsvorrichtung (1) in den anderen Raumrichtungen zu verhindern.

12. Energieversorgungsvorrichtung (1) zur Verwendung in dem System nach einem der Ansprüche 1 bis 9
**dadurch gekennzeichnet, dass**
die Energieversorgungsvorrichtung (1) einen ersten Kontaktbereich (20) zur lösbaren Verbindung der Energieversorgungsvorrichtung (1) mit einer Werkzeugmaschine (2) aufweist, wobei der erste Kontaktbereich (20) ein erstes Kontaktmaterial (23) mit einer zweiten Dichte aufweist, wobei der erste Kontaktbereich (20) dazu eingerichtet ist, eine Relativbewegung der Werkzeugmaschine (2) und der Energieversorgungsvorrichtung (1) in einer Einschubrichtung zuzulassen und eine Relativbewegung zwischen der Werkzeugmaschine (2) und der Energieversorgungsvorrichtung (1) in den anderen Raumrichtungen zu verhindern.

13. Energieversorgungsvorrichtung (1) nach Anspruch 12
**dadurch gekennzeichnet, dass**
die Energieversorgungsvorrichtung (1) mindestens eine Zelle (4) umfasst, wobei die mindestens eine Zelle (2) einen Innenwiderstand DCR_I von kleiner als 10 Milliohm aufweist.

14. Energieversorgungsvorrichtung (1) nach Anspruch 12 oder 13
**dadurch gekennzeichnet, dass**
die Energieversorgungsvorrichtung (1) mindestens eine Zelle (4) umfasst, wobei die mindestens Zelle (4) eine Oberfläche A und ein Volumen V aufweisen, wobei ein Verhältnis A/V von Oberfläche zu Volumen größer ist als das Sechsfache, bevorzugt das Achtfache und besonders bevorzugt das Zehnfache des Kehrwerts der dritten Wurzel des Volumens.

15. Energieversorgungsvorrichtung (1) nach einem der Ansprüche 12 bis 14
**dadurch gekennzeichnet, dass**
die Energieversorgungsvorrichtung (1) mindestens eine Zelle (4) umfasst, wobei ein Verhältnis eines Widerstands der mindestens einen Zelle (2) zu einer Oberfläche A der mindestens einen Zelle (4) kleiner als 0,2 Milliohm/cm² ist, bevorzugt kleiner als 0,1 Milliohm/cm², am meisten bevorzugt kleiner als 0,05 Milliohm/cm².
